# EUROPEAN PATENT APPLICATION

(11) **EP 4 439 357 A1**
(43) Date of publication of application: **02.10.2024**
(21) Application number: 22895323.8
(22) Date of filing: 19.10.2022
(51) Int. Cl.: G06F 21/62, H04N 23/60

(54) **INFORMATION PROCESSING DEVICE, INFORMATION PROCESSING METHOD, IMAGE-CAPTURING DEVICE, AND CONTROL METHOD**

(30) Priority: 22.11.2021 JP 2021189367
(71) Applicant: Sony Semiconductor Solutions Corporation, Atsugi-shi, Kanagawa 243-0014 (JP)
(72) Inventor: TSUJI, Yuki, Atsugi-shi, Kanagawa 243-0014 (JP); EKI, Ryoji, Atsugi-shi, Kanagawa 243-0014 (JP); NAGAO, Shinichi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/038979
(87) International publication number: WO 2023/090037

(57) **Abstract**

The present technology is intended to protect a camera system using an imaging device from being abused, the imaging device being configured to perform image processing using an artificial intelligence model.

An information processing device according to the present technology includes a control unit configured to determine whether or not a use state of an imaging device corresponds to a specific use state, the imaging device being configured to perform, using an artificial intelligence model, image processing on a captured image obtained by capturing an image of a subject, and perform, in a case where the use state is determined to correspond to the specific use state, disabling processing of making the imaging device unable to use the artificial intelligence model.

## Description

### TECHNICAL FIELD

The present technology relates to an information processing device capable of controlling an imaging device that performs image processing using an artificial intelligence model on a captured image obtained by capturing an image of a subject and a method thereof, and the imaging device and a method thereof.

### BACKGROUND ART

A solution business using an imaging device that performs image processing using an artificial intelligence model (hereinafter referred to as "artificial intelligence (AI) camera") on a captured image is conceivable. For example, there may be a business that provides a system in which one or more AI cameras are arranged within a store, a recognition result regarding an attribute (e.g., gender, age group, etc.) and a behavior pattern of a customer is obtained by, for example, image recognition processing, and the recognition result is presented to a user over the Internet or the like.

Since image processing is performed on the AI camera side, the processing can be distributed and the amount of communication data can be reduced compared to a system in which a server device side performs image processing on the basis of a captured image acquired from each camera.

Note that Patent Document 1 below can be cited as a related art.

### CITATION LIST

### PATENT DOCUMENT

Patent Document 1: WO 2020/255575

### SUMMARY OF THE INVENTION

### PROBLEMS TO BE SOLVED BY THE INVENTION

Here, in a case where the system using the AI camera as described above is considered, each AI camera has a capability of relatively advanced image recognition, so that there is a possibility that damage will increase in a case where the system is abused by the user.

For example, on the assumption that a system that detects a specific person and makes a notification is installed as a surveillance camera system for monitoring streets, if the system is abused, there is a possibility that the specific person is affected by the abuse.

The present technology has been made in view of the above-described circumstances, and it is therefore an object of the present technology to protect a camera system from being abused, the camera system using an imaging device that performs image processing using an artificial intelligence model.

### SOLUTIONS TO PROBLEMS

An information processing device according to the present technology includes a control unit configured to determine whether or not a use state of an imaging device corresponds to a specific use state, the imaging device being configured to perform, using an artificial intelligence model, image processing on a captured image obtained by capturing an image of a subject, and perform, in a case where the use state is determined to correspond to the specific use state, disabling processing of making the imaging device unable to use the artificial intelligence model.

It is therefore possible to disable the use of the imaging device in response to a case where the use state of the imaging device is inappropriate.

Furthermore, an information processing method according to the present technology includes performing, by a computer device, disabling control processing, the disabling control processing including determining whether or not a use state of an imaging device corresponds to a specific use state, the imaging device being configured to perform, using an artificial intelligence model, image processing on a captured image obtained by capturing an image of a subject, and performing, in a case where the use state is determined to correspond to the specific use state, disabling processing of making the imaging device unable to use the artificial intelligence model.

Such an information processing method can also produce effects similar to the effects produced by the above-described information processing device according to the present technology.

An imaging device according to the present technology includes: an image processing unit configured to perform, using an artificial intelligence model, image processing on a captured image obtained by capturing an image of a subject; and a control unit configured to switch, on the basis of output data of the image processing, a level of security processing for the output data.

The security processing described herein refers to processing for enhancing safety from the viewpoint of preventing data content leakage or spoofing, such as processing of encrypting target data or processing of attaching electronic signature data for authenticity determination to target data. The switching of the level of the security processing means switching of a level of safety from such a viewpoint of preventing data content leakage or spoofing.

A control method according to the present technology is applied to an imaging device including an image processing unit configured to perform, using an artificial intelligence model, image processing on a captured image obtained by capturing an image of a subject, the control method including performing, by the imaging device, control to switch, on the basis of output data of the image processing, a level of security processing for the output data.

Such a control method can also produce effects similar to the effects produced by the above-described imaging device according to the present technology.

### BRIEF DESCRIPTION OF DRAWINGS

Fig. 1 is a block diagram illustrating a schematic configuration example of an information processing system as an embodiment.
Fig. 2 is an explanatory diagram of a method for registering an AI model and AI-based software in an information processing device belonging to a cloud side.
Fig. 3 is a flowchart illustrating a processing example when the AI model and the AI-based software is registered in the information processing device belonging to the cloud side.
Fig. 4 is a block diagram illustrating a hardware configuration example of the information processing device as an embodiment.
Fig. 5 is a block diagram illustrating a configuration example of an imaging device as an embodiment.
Fig. 6 is a functional block diagram for describing a function of the information processing device as the embodiment, the function being related to system abuse prevention.
Fig. 7 is a flowchart of processing corresponding to registration of a user account in the information processing system as the embodiment.
Fig. 8 is a flowchart of processing from purchase of the AI-based software and the AI model to deployment of the AI-based software and the AI model in the information processing system as the embodiment.
Fig. 9 is a flowchart illustrating a specific processing example in a use control unit included in the information processing device as the embodiment.
Fig. 10 is a functional block diagram for describing a function of the imaging device as the embodiment, the function being related to security control.
Fig. 11 is a flowchart illustrating a specific processing example in a security control unit included in the imaging device as the embodiment.
Fig. 12 is an explanatory diagram of an example of how a connection between a cloud and an edge is established.
Fig. 13 is an explanatory diagram of an example of a structure of an image sensor.
Fig. 14 is an explanatory diagram of deployment using a container technology.
Fig. 15 is an explanatory diagram of a specific configuration example of a cluster constructed by a container engine and an orchestration tool.
Fig. 16 is an explanatory diagram of an example of a processing flow related to AI model relearning.
Fig. 17 is a diagram illustrating an example of a login screen related to a marketplace.
Fig. 18 is a diagram illustrating an example of a developer screen related to the marketplace.
Fig. 19 is a diagram illustrating an example of a user screen related to the marketplace.

### MODE FOR CARRYING OUT THE INVENTION

Hereinafter, embodiments of an information processing device according to the present technology will be described in the following order with reference to the accompanying drawings.
<1. Information processing system>
(1-1. Overall system configuration)
(1-2. Registration of AI model and AI software>
(1-3. Configuration of information processing device)
(1-4. Configuration of imaging device)
<2. System abuse prevention processing as embodiment>
<3. Output data security processing as embodiment>
<4. Modification>
(4-1. Connection between cloud and edge)
(4-2. Sensor structure)
(4-3. Deployment using container technology)
(4-4. Processing flow related to AI model retraining)
(4-5. Screen example of marketplace)
(4-6. Other modifications)
<5. Summary of embodiment>
<6. Present technology>

### <1. Information processing system>

### (1-1. Overall system configuration)

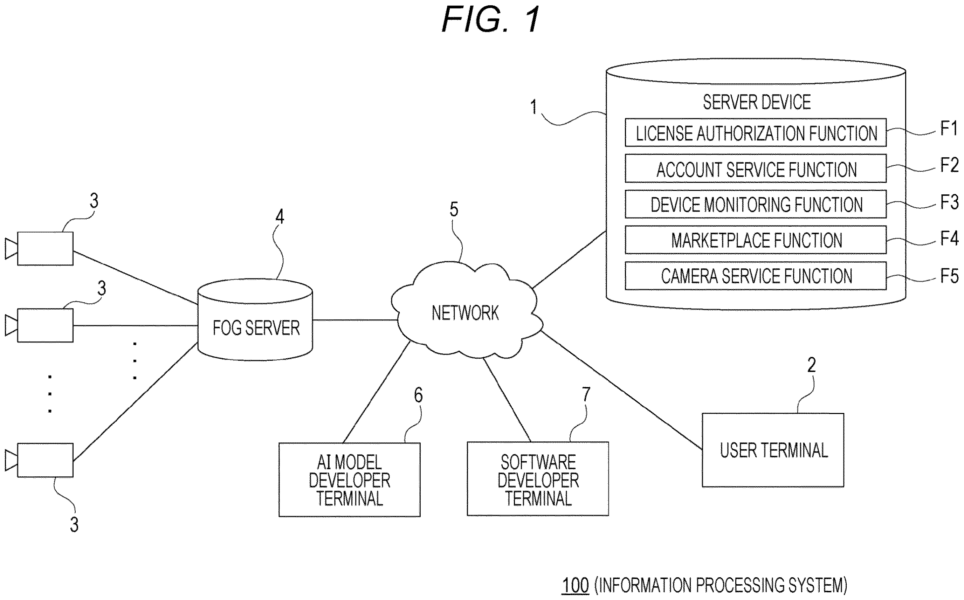

Fig. 1 is a block diagram illustrating a schematic configuration example of an information processing system 100 as an embodiment according to the present technology.

As illustrated in the drawing, the information processing system 100 includes a server device 1, one or a plurality of user terminals 2, a plurality of cameras 3, a fog server 4, an artificial intelligence (AI) model developer terminal 6, and a software developer terminal 7. In the present example, the server device 1 is capable of communicating with the user terminal 2, the fog server 4, the AI model developer terminal 6, and the software developer terminal 7 over a network 5 such as the Internet.

The server device 1, the user terminal 2, the fog server 4, the AI model developer terminal 6, and the software developer terminal 7 are each configured as an information processing device including a microcomputer equipped with a central processing unit (CPU), a read only memory (ROM), and a random access memory (RAM).

Here, the user terminal 2 is an information processing device designed to be used by a user who is a recipient of a service using the information processing system 100. Furthermore, the server device 1 is an information processing device designed to be used by a service provider.

Each camera 3 includes an image sensor such as a charge coupled device (CCD) type image sensor or a complementary metal oxide semiconductor (CMOS) type image sensor and captures an image of a subject to obtain image data (captured image data) as digital data. Furthermore, as will be described later, each camera 3 also has a function of performing, on the captured image, image processing (AI image processing) such as image recognition processing using an AI model.

Each camera 3 is capable of communicating data with the fog server 4, and is capable of transmitting various data such as processing result information indicating a result of the image processing using the AI model to the fog server 4 and receiving various data from the fog server 4, for example.

Here, the information processing system 100 illustrated in Fig. 1 is designed to cause the fog server 4 or the server device 1 to generate information regarding analysis of the subject on the basis of the processing result information obtained as a result of the AI image processing performed by each camera 3 and allow the user to view the generated analysis information using the user terminal 2.

In this case, the possible use of each camera 3 includes the uses as various types of surveillance cameras. The examples of the use include the uses as: a surveillance camera for monitoring indoors such as a store, an office, or a house, a surveillance camera (including a traffic surveillance camera and the like) for monitoring outdoor such as a parking lot or a street, a surveillance camera for a production line of factory automation (FA) or industrial automation (IA), and a surveillance camera for monitoring the inside or outside of a vehicle.

For example, in a case where the camera 3 is used as a surveillance camera for a store, it is conceivable to arrange a plurality of cameras 3 at predetermined positions in the store so as to allow the user to check customer demographics (gender, age group, etc.), customer actions (flow line) within the store, and the like. In this case, it is conceivable to generate, as the above-described analysis information, information regarding the customer demographics, information regarding the flow line in the store, information regarding a congestion status at a checkout (for example, information regarding a waiting time at the checkout), and the like.

Alternatively, in a case where the camera 3 is used as a traffic surveillance camera, it is conceivable to arrange each camera 3 at a position near a road so as to allow the user to recognize information such as a license number (vehicle number), a vehicle color, a vehicle type, and the like regarding a passing vehicle, and in this case, it is conceivable to generate, as the above-described analysis information, information such as the license number, the vehicle color, the vehicle type, and the like.

Furthermore, in a case where the camera 3 is used as a traffic surveillance camera for a parking lot, it is conceivable to arrange the camera so as to be able to monitor each parked vehicle, monitor whether or not there is a suspicious person acting suspiciously around each vehicle, and in a case where there is a suspicious person, make a notification of a fact that there is a suspicious person, an attribute (gender, age group, clothes, etc.) of the suspicious person, and the like.

Moreover, it is also conceivable to monitor a street or an available space in the parking lot and notify the user of a place of the available parking space.

In a case where the camera 3 is used as a surveillance camera for a store as described above, the fog server 4 is designed to be arranged in a store being monitored together with each camera 3, that is, arranged for each object being monitored, for example. Providing the fog server 4 for each object being monitored such as a store as described above eliminates the need for the server device 1 to directly receive transmission data from the plurality of cameras 3 installed for the objects being monitored, which allows a reduction in processing load on the server device 1.

Note that, in a case where there is a plurality of stores being monitored and all the stores belong to the same corporate group, one fog server 4 may be provided for the plurality of stores rather than being provided for each store. That is, the present technology is not limited to the configuration where one fog server 4 is provided for each object being monitored, and one fog server 4 can be provided for a plurality of objects being monitored.

Note that, in a case where the server device 1 or each camera 3 can have the function of the fog server 4 due to large processing capacity of the server device 1 or each camera 3, the fog server 4 may be removed from the information processing system 100, each camera 3 may be directly connected to the network 5, and the server device 1 may directly receive transmission data from the plurality of cameras 3.

The server device 1 is an information processing device having a function of performing overall control of the information processing system 100.

As illustrated in the drawing, the server device 1 has a license authorization function F1, an account service function F2, a device monitoring function F3, a marketplace function F4, and a camera service function F5 as functions related to control over the information processing system 100.

The license authorization function F1 is a function of performing processing related to various types of authentication. Specifically, in the license authorization function F1, processing related to device authentication of each camera 3 and processing related to authentication of each of the AI model, software, and firmware used for the camera 3 are performed.

Here, the above software means software necessary for appropriately performing the image processing using the AI model in the camera 3.

In order to appropriately perform the AI image processing on the basis of the captured image and transmit the result of the AI image processing to the fog server 4 or the server device 1 in a suitable format, it is requested to control data input into the AI model and appropriately process output data of the AI model. The above software is software including peripheral processing necessary for appropriately performing the image processing using the AI model. Such software can be also described as software for implementing a desired function using an AI model, and is thus hereinafter referred to as "AI-based software".

Note that possible examples of the AI-based software include software using only one AI model and software using two or more AI models. For example, there may be AI-based software having a processing flow in which an image processing result (image data) obtained by an AI model that performs AI image processing using a captured image as input data is input into another AI model to perform second AI image processing.

In the license authorization function F1, to authenticate the camera 3, processing of issuing a device identification (ID) for each camera 3 is performed in a case where the connection is established with the camera 3 over the network 5.

Furthermore, to authenticate the AI model and software, processing of issuing unique IDs (AI model ID and software ID) is performed on the AI model and the AI-based software for which registration is applied from the AI model developer terminal 6 and the software developer terminal 7.

Furthermore, in the license authorization function F1, processing of issuing various keys, certificates, and the like for enabling secure communication between the server device 1 and each of the camera 3, the AI model developer terminal 6, and the software developer terminal 7 to a manufacturer of the camera 3 (particularly, a manufacturer of an image sensor 30 to be described below), an AI model developer, and a software developer is performed.

Moreover, in the license authorization function F1, in a case where user registration (account information registration including the issuance of a user ID) is performed by the account service function F2 to be described below, processing of associating the camera 3 (the device ID) purchased by the user with the user ID is performed.

The account service function F2 is a function of generating and managing account information of the user. In the account service function F2, input of user information is received, and account information is generated on the basis of the input user information (account information including at least a user ID and password information is generated).

Furthermore, in the account service function F2, registration processing (registration of account information) for the AI model developer and the developer of the AI-based software (hereinafter referred to as "software developer" in some cases) is performed.

The device monitoring function F3 is a function of performing processing of monitoring a use state of the camera 3. For example, various elements related to the use states of the camera 3 such as a location where the camera 3 is used, an output frequency of the output data of the AI image processing, and a free space of a memory used for the AI image processing are monitored.

The marketplace function F4 is a function of selling the AI model and the AI-based software. For example, the user can purchase the AI-based software and the AI model used by the AI-based software via a WEB site for sales (site for sales) provided by the marketplace function F4. Furthermore, the software developer can purchase the AI model for creating the AI-based software via the site for sales described above.

The camera service function F5 is a function of providing a user with a service related to the use of the camera 3.

As one camera service function F5, for example, a function related to generation of the above-described analysis information can be exemplified. That is, the camera service functions F5 is a function of performing processing of generating information regarding analysis of a subject on the basis of processing result information of AI image processing in the camera 3 and allowing the user to view the generated analysis information using the user terminal 2.

Furthermore, in the present example, the camera service function F5 includes an imaging setting search function. Specifically, this imaging setting search function is a function of acquiring the processing result information indicating the result of the AI image processing from the camera 3 and searching for imaging setting information of the camera 3 using AI on the basis of the acquired processing result information. Here, the imaging setting information means, in a broad sense, setting information related to an imaging operation for obtaining a captured image. Specifically, the imaging setting information includes, in a broad sense, optical settings such as a focus and a diaphragm, settings related to an operation of reading a captured image signal such as a frame rate, an exposure time, and a gain, and settings related to image signal processing on the read captured image signal such as gamma correction processing, noise reduction processing, and super-resolution processing.

Furthermore, the camera service function F5 includes an AI model search function. This AI model search function is a function of acquiring processing result information of the AI image processing from the camera 3 and searching, using AI, for an optimum AI model used for the AI image processing in the camera 3 on the basis of the acquired processing result information. The search for the AI model described herein refers to processing of optimizing various processing parameters such as a weighting factor, setting information (including, for example, information such as a kernel size and the like) related to a neural network structure, and the like, for example, in a case where the AI image processing is performed by a convolutional neural network (CNN) including a convolution operation.

Furthermore, the camera service function F5 also includes a function of retraining an AI model (retraining function).

For example, an AI model retrained using dim images from the camera 3 arranged in the store is deployed to the camera 3, which allows an increase in image recognition rate or the like for images captured in a dim place. Furthermore, an AI model retrained using bright images from the camera 3 arranged outside the store is deployed to the camera 3, which allows an increase in image recognition rate or the like for images captured in a bright place.

That is, the user can always obtain optimized processing result information by redeploying the retrained AI model to the camera 3.

Note that the processing of relearning an AI model may be optionally selected by the user on the marketplace, for example.

With the imaging setting search function and the AI model search function as described above, for example, it is possible to perform imaging settings so as to make the processing result of AI image processing such as image recognition satisfactory, and to perform AI image processing using a suitable AI model in accordance with an actual use environment.

Here, in the above description, the configuration where the license authorization function F1, the account service function F2, the device monitoring function F3, the marketplace function F4, and the camera service function F5 are implemented by the server device 1 alone has been given as an example, but such functions may be implemented in a shared manner by a plurality of information processing devices. For example, one information processing device may perform each of the plurality of above-described functions. Alternatively, a plurality of information processing devices may perform, in a shared manner, a single function among the above-described functions.

The AI model developer terminal 6 illustrated in Fig. 1 is an information processing device used by the developer of the AI model.

Furthermore, the software developer terminal 7 is an information processing device used by the developer of the AI-based software.

### (1-2. Registration of AI model and AI software>

As understood from the above description, in the information processing system 100 according to the embodiment, the camera 3 performs image processing using the AI model and the AI-based software, and an advanced application function using result information of the image processing performed on the camera 3 side is implemented by the server device 1.

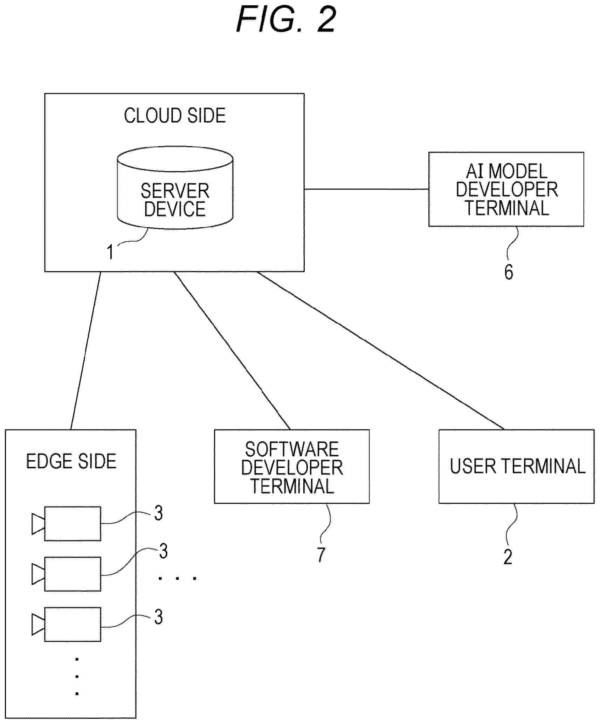

Here, an example of how to register the AI model and the AI-based software in the server device 1 (or including the fog server 4) belonging to the cloud side will be described with reference to Fig. 2.

Note that, although the fog server 4 is not illustrated in Fig. 2, the fog server 4 may be responsible for some of the cloud-side functions, or may be responsible for some of the cloud-side (camera 3 side) functions.

In the cloud-side server device 1, for example, a training dataset to be used for AI training is prepared. The AI model developer communicates with the server device 1 using the AI model developer terminal 6, and downloads such a training dataset. At this time, the training dataset may be provided for a fee. In this case, the training dataset can be sold to the AI model developer by means of the above-described marketplace function F4 prepared as a cloud-side function.

The AI model developer develops the AI model using the training dataset, and then registers the developed AI model in the marketplace (sales site provided by the marketplace function F4) using the AI model developer terminal 6. At this time, an incentive may be paid to the AI model developer when the AI model is downloaded.

Furthermore, the software developer downloads the AI model from the marketplace using the software developer terminal 7, and develops the AI-based software. At this time, as described above, an incentive may be paid to the AI model developer.

The software developer registers the developed AI-based software in the marketplace using the software developer terminal 7. As described above, the incentive may be paid to the software developer when the AI-based software registered in the marketplace is downloaded.

Note that the marketplace (server device 1) manages a correspondence between the AI-based software registered by the software developer and the AI model used by the AI-based software.

The user can purchase the AI-based software and the AI model used by the AI-based software from the marketplace using the user terminal 2. An incentive may be paid to the AI model developer in response to the purchase (download).

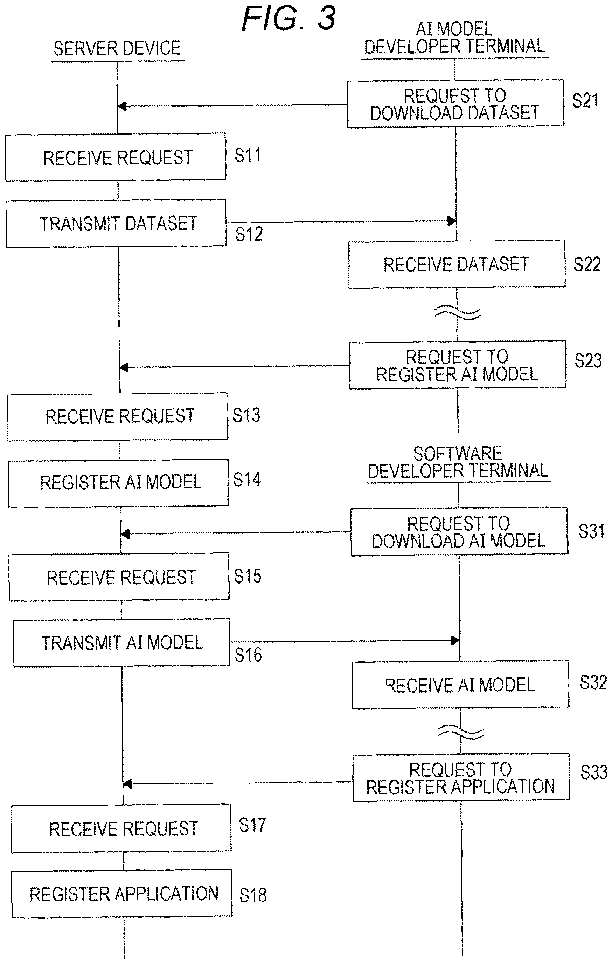

For confirmation, Fig. 3 illustrates a flowchart of the above-described processing flow.

In Fig. 3, in step S21, the AI model developer terminal 6 transmits a request to download a dataset (training dataset) to the server device 1. This download request is made when, for example, the AI model developer views a list of datasets registered in the marketplace using the AI model developer terminal 6 having a display unit including a liquid crystal display (LCD), an organic electro luminescence (EL) panel, or the like, and selects a desired dataset.

Accordingly, the server device 1 receives the request in step S11, and transmits the requested dataset to the AI model developer terminal 6 in step S12.

The AI model developer terminal 6 receives the dataset in step S22. This allows the AI model developer to develop the AI model using the dataset.

After the end of the development of the AI model, when the AI model developer performs an operation of registering the developed AI model in the marketplace (for example, designating a name of the AI model, an address at which the AI model is placed, and the like), the AI model developer terminal 6 transmits a request to register the AI model in the marketplace to the server device 1 in step S23.

Accordingly, the server device 1 receives the registration request in step S13, and performs processing of registering the AI model in step S14. This allows the AI model to be displayed on the marketplace, for example. As a result, a user other than the AI model developer can download the AI model from the marketplace.

For example, a software developer who intends to develop AI-based software views a list of AI models registered in the marketplace using the software developer terminal 7. The software developer terminal 7 transmits, in response to an operation performed by the software developer (for example, an operation of selecting one of the AI models on the marketplace), a request to download the selected AI model to the server device 1 in step S31.

The server device 1 receives the request in step S15, and transmits the AI model to the software developer terminal 7 in step S16.

The software developer terminal 7 receives the AI model in step S32. This allows the software developer to develop the AI-based software using the AI model.

After the end of the development of the AI-based software, when the software developer performs an operation of registering the AI-based software in the marketplace (for example, an operation of designating a name of the AI-based software, an address at which the AI model used by the AI-based software is placed, and the like), the software developer terminal 7 transmits a request of registering the AI-based software (in the drawing, an application registration request) to the server device 1 in step S33.

The server device 1 receives the registration request in step S17, and performs a registration of the AI-based software (in the drawing, application registration) in step S18. This allows the AI-based software to be displayed on the marketplace, for example, and as a result, the user can select an AI-based software (and an AI model used by the AI-based software) on the marketplace and download the AI-based software.

Here, in order to cause the camera 3 to use the purchased AI-based software and AI model, the user requests the server device 1 to install the AI-based software and the AI model available for use in the camera 3.

Hereinafter, installing the AI-based software and the AI model available for use in the camera 3 as described above is referred to as "deployment".

Deploying the purchased AI-based software and the AI model to the camera 3 allows the camera 3 to perform processing using the AI model, and to not only capture an image but also detect a customer, a vehicle, or the like using the AI model.

A cloud application has already been loaded in the server device 1 belonging to the cloud side, so that each user can use the cloud application over the network 5. Then, in the cloud application, an application or the like that performs the above-described analysis processing is prepared. For example, it is an application or the like that analyzes a customer flow line using attribute information or image information regarding the customer (for example, a person extraction image or the like).

The use of the cloud application for the flow line analysis using the user terminal 2 allows the user to analyze a customer flow line in the user's own store and view the analysis result. The analysis result is presented by means of, for example, a graphical presentation of the customer flow line on a map of the store.

The result of the flow line analysis may be displayed in the form of, for example, a heat map, to present the density of customers or the like. Furthermore, the information regarding the flow line may be displayed separately for information regarding each attribute of customers.

Note that the analysis processing includes, for example, processing of analyzing a traffic volume in addition to the above-described processing of analyzing a flow line. For example, in the processing of analyzing a flow line, processing result information is obtained by performing image recognition processing of recognizing a person for each captured image captured by the camera 3. Then, an imaging time of each captured image and a pixel region where the person to be detected is detected are specified on the basis of the processing result information, and the movement of the person in the store is finally grasped to analyze the flow line of the target person.

In a case where not only the movement of the specific person but also the movement of store visitors is grasped as a whole, it is possible to analyze, by performing such processing on each store visitor and finally performing statistical processing, a general flow line of the store visitors or the like.

Here, an AI model optimized for each user may be registered in the cloud-side marketplace. Specifically, for example, the captured image captured by the camera 3 arranged in a store managed by a certain user is uploaded to and stored in the cloud side as needed, and the server device 1 performs the processing of retraining the AI model each time a certain number of the uploaded captured images are accumulated, and re-registers the retained AI model in the marketplace.

Furthermore, in a case where personal information is included in the information (for example, image information) uploaded from the camera 3 to the server device 1, data from which information regarding privacy has been removed from the viewpoint of privacy protection may be uploaded, or data from which privacy-related information has been removed may be used by the AI model developer or the software developer.

### (1-3. Configuration of information processing device)

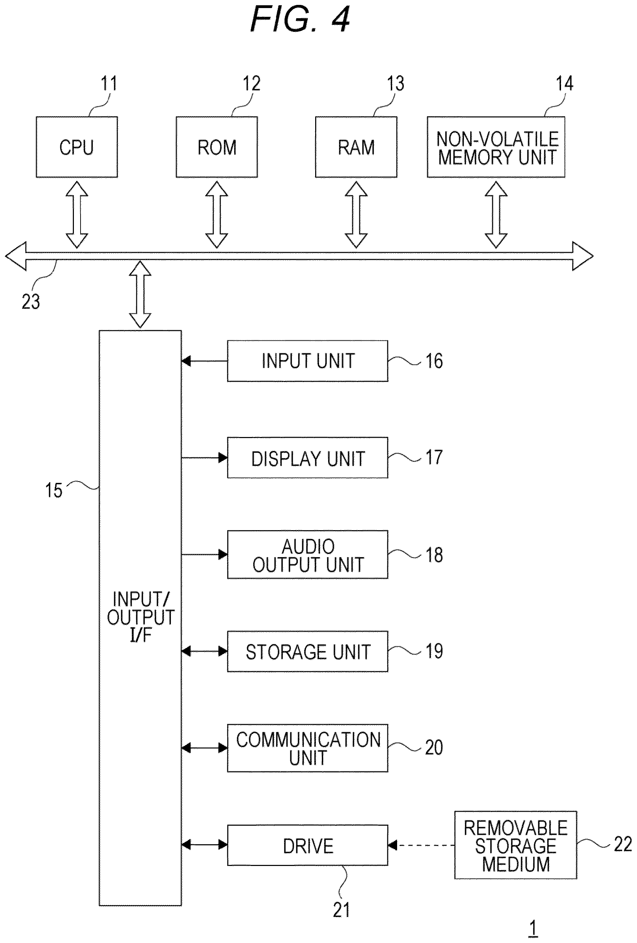

Fig. 4 is a block diagram illustrating a hardware configuration example of the server device 1.

As illustrated in the drawing, the server device 1 includes a CPU 11. The CPU 11 functions as an arithmetic processing unit that performs the various type of processing described as the processing of the server device 1, and performs various types of processing in accordance with a program stored in a non-volatile memory unit 14 such as a ROM 12 or an electrically erasable programmable read-only memory (EEP-ROM), or a program loaded from a storage unit 19 into a RAM 13. The RAM 13 also stores, as needed, data and the like necessary for the CPU 11 to perform various types of processing.

The CPU 11, the ROM 12, the RAM 13, and the non-volatile memory unit 14 are connected to each other over a bus 23. An input/output interface (I/F) 15 is also connected to the bus 23.

An input unit 16 including an operation element or an operation device is connected to the input/output interface 15. Possible examples of the input unit 16 include various types of operation elements or operation devices, such as a keyboard, a mouse, a key, a dial, a touch panel, a touch pad, and a remote controller.

The input unit 16 detects a user operation, and the CPU 11 interprets a signal corresponding to the input operation.

Furthermore, a display unit 17 including a liquid crystal display (LCD), an organic electro-luminescence (EL) panel, or the like, and an audio output unit 18 including a speaker or the like are integrally or separately connected to the input/output interface 15.

The display unit 17 is used for displaying various types of information, and includes, for example, a display device provided in a housing of a computer device, a separate display device connected to the computer device, or the like.

The display unit 17 displays an image for various types of image processing, a moving image to be processed, or the like, on a display screen on the basis of an instruction from the CPU 11. Furthermore, the display unit 17 displays various types of operation menus, icons, messages, and the like, that is, displays as a graphical user interface (GUI), on the basis of an instruction from the CPU 11.

In some cases, the storage unit 19 including a hard disk drive (HDD), a solid-state memory, or the like, and a communication unit 20 including a modem or the like are connected to the input/output interface 15.

The communication unit 20 performs communication processing over a transmission path such as the Internet and performs wired/wireless communication, bus communication, or the like with various devices.

A drive 21 is also connected to the input/output interface 15 as needed, and a removable storage medium 22 such as a magnetic disk, an optical disc, a magneto-optical disk, or a semiconductor memory is attached to the input/output interface 15 as needed.

A data file such as a program used for each processing can be read from the removable storage medium 22 by the drive 21. The read data file is stored in the storage unit 19, and an image or audio included in the data file is output by the display unit 17 or the audio output unit 18. Furthermore, a computer program and the like read from the removable storage medium 22 are installed in the storage unit 19 as needed.

In the computer device having the hardware configuration as described above, for example, software for the processing of the present embodiment can be installed via network communication by the communication unit 20 or the removable storage medium 22. Alternatively, the software may be stored in advance in the ROM 12, the storage unit 19, or the like.

The CPU 11 performs processing operations on the basis of various programs to perform information processing or communication processing necessary for the server device 1 described above.

Note that the server device 1 is not limited to a single computer device as illustrated in Fig. 4 and may be configured as a system including a plurality of computer devices. The plurality of computer devices may be systematized by a local area network (LAN) or the like, or may be arranged in a remote place by a virtual private network (VPN) or the like using the Internet or the like. The plurality of computer devices may include a computer device as a server group (cloud) that can be used by a cloud computing service.

### (1-4. Configuration of imaging device)

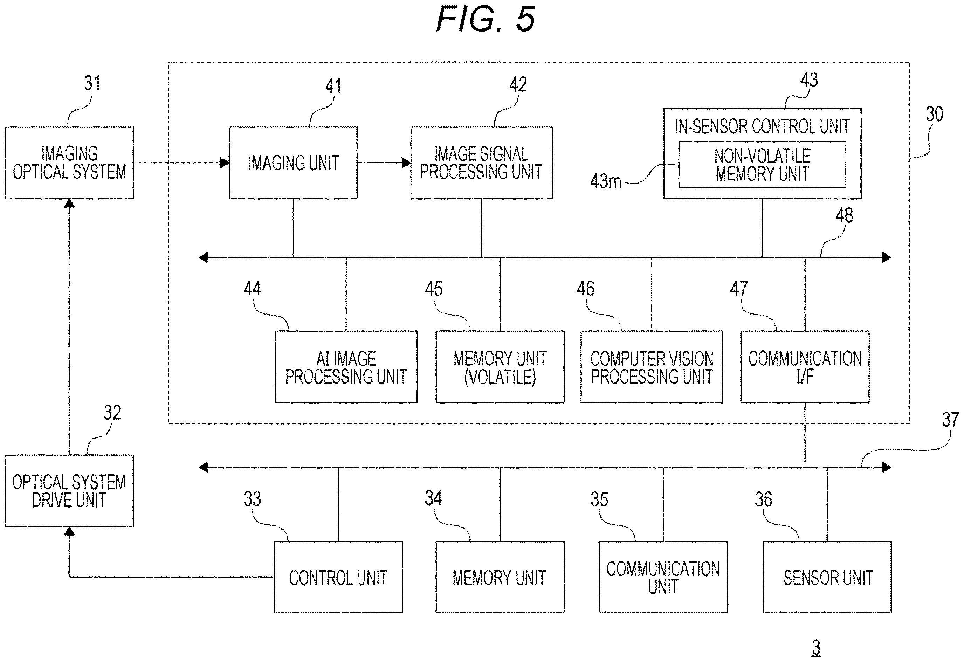

Fig. 5 is a block diagram illustrating a configuration example of the camera 3.

As illustrated in the drawing, the camera 3 includes an image sensor 30, an imaging optical system 31, an optical system drive unit 32, a control unit 33, a memory unit 34, a communication unit 35, and a sensor unit 36. The image sensor 30, the control unit 33, the memory unit 34, the communication unit 35, and the sensor unit 36 are connected over a bus 37, and can communicate data with each other.

The imaging optical system 31 includes lenses such as a cover lens, a zoom lens, and a focus lens, and a diaphragm (iris) mechanism. Light (incident light) from a subject is guided by the imaging optical system 31 and condensed on a light receiving surface of the image sensor 30.

The optical system drive unit 32 comprehensively represents drive units of the zoom lens, the focus lens, and the diaphragm mechanism included in the imaging optical system 31. Specifically, the optical system drive unit 32 includes an actuator for driving each of the zoom lens, the focus lens, and the diaphragm mechanism, and a drive circuit of the actuator.

The control unit 33 includes, for example, a microcomputer including a CPU, a ROM, and a RAM, and performs the overall control of the camera 3 by causing the CPU to perform various types of processing in accordance with a program stored in the ROM or a program loaded in the RAM.

Furthermore, the control unit 33 instructs the optical system drive unit 32 to drive the zoom lens, the focus lens, the diaphragm mechanism, and the like. The optical system drive unit 32 moves the focus lens and the zoom lens, opens or closes a diaphragm blade of the diaphragm mechanism, or the like in response to such a drive instruction.

Furthermore, the control unit 33 controls the writing and reading of various types of data to and from the memory unit 34.

The memory unit 34 is a non-volatile storage device such as an HDD or a flash memory device and is used for storing data that is used when the control unit 33 performs various types of processing. Furthermore, the memory unit 34 can also be used as a storage destination (recording destination) of the image data output from the image sensor 30.

The control unit 33 communicates various types of data with an external device via the communication unit 35. The communication unit 35 in the present example is capable of communicating data with at least the fog server 4 illustrated in Fig. 1.

Alternatively, the communication unit 35 is capable of communicating over the network 5, and communicates data with the server device 1 in some cases.

The sensor unit 36 comprehensively represents sensors other than the image sensor 30 included in the camera 3. Examples of the sensors included in the sensor unit 36 include a global navigation satellite system (GNSS) sensor for detecting the position and altitude of the camera 3, an altitude sensor, a temperature sensor for detecting ambient temperature, and a motion sensor such as an acceleration sensor or an angular velocity sensor for detecting the motion of the camera 3.

The image sensor 30 is configured as a solid-state imaging element of a CCD type, a CMOS type, or the like, for example, and includes an imaging unit 41, an image signal processing unit 42, an in-sensor control unit 43, an AI image processing unit 44, a memory unit 45, a computer vision processing unit 46, and a communication interface (I/F) 47 as illustrated in the drawing, and such components can communicate data with each other over a bus 48.

The imaging unit 41 includes a pixel array unit in which pixels having photoelectric conversion elements such as photodiodes are two-dimensionally arranged, and a readout circuit that reads out an electric signal obtained by photoelectric conversion from each pixel included in the pixel array unit.

This readout circuit performs, for example, correlated double sampling (CDS) processing, automatic gain control (AGC) processing, and the like on the electric signal obtained by photoelectric conversion, and further performs analog/digital (A/D) conversion processing on the electric signal.

The image signal processing unit 42 performs preprocessing, synchronization processing, YC generation processing, resolution conversion processing, codec processing, and the like on a captured image signal as digital data obtained as a result of the A/D conversion processing.

In the preprocessing, clamp processing of clamping the black level of red (R), green (G), and blue (B) to a predetermined level, correction processing among R, G, B color channels and the like are performed on the captured image signal. In the synchronization processing, color separation processing is performed such that image data for each pixel has all the R, G, and B color components. For example, in a case of an imaging element using a Bayer color filter, demosaicing processing is performed as the color separation processing. In the YC generation processing, a luminance (Y) signal and a color (C) signal are generated (separated) from the image data of R, G, and B. In the resolution conversion processing, resolution conversion processing is performed on the image data subjected to various types of signal processing.

In the codec processing, for example, encoding processing for recording or communication and file generation are performed on the image data subjected to the various types of processing described above. In the codec processing, it is possible to generate a file in a format such as moving picture experts group (MPEG)-2 or H.264 as a moving image file format. It is also conceivable to generate a file in a format such as joint photographic experts group (JPEG), tagged image file format (TIFF), or graphics interchange format (GIF) as a still image file.

The in-sensor control unit 43 includes a microcomputer including, for example, a CPU, a ROM, a RAM, and the like, and performs overall control of the operation of the image sensor 30. For example, the in-sensor control unit 43 gives an instruction to the imaging unit 41 to perform execution control of the imaging operation. Furthermore, processing execution control is also performed on the image signal processing unit 42.

The in-sensor control unit 43 includes a non-volatile memory unit 43m. The non-volatile memory unit 43m is used for storing data used by the CPU of the in-sensor control unit 43 for various types of processing.

The AI image processing unit 44 includes a programmable arithmetic processing device such as a CPU, a field programmable gate array (FPGA), or a digital signal processor (DSP), and performs image processing using an AI model on a captured image.

Examples of the image processing (AI image processing) performed by the AI image processing unit 44 include image recognition processing of recognizing a subject as a specific target such as a person or a vehicle. Alternatively, it is also conceivable that the AI image processing is performed as object detection processing of detecting the presence or absence of any object regardless of the type of the subject.

It is possible to switch the AI image processing function of the AI image processing unit 44 by changing the AI model (algorithm of the AI image processing). Hereinafter, an example in a case where the AI image processing is image recognition processing will be described.

Although various function types of specific image recognition are conceivable, for example, the following types can be exemplified.
- Class identification
- Semantic segmentation
- Human detection
- Vehicle detection
- Target tracking
- Optical character recognition (OCR)

Among the above function types, the class identification is a function of identifying a class of the target. The term "class" described herein refers to information indicating a category of an object, and refers to, for example, classifications such as "person", "automobile", "airplane", "ship", "truck", "bird", "cat", "dog", "deer", "frog", "horse", and the like.

The target tracking is a function of tracking a target subject, and can be also described as a function of obtaining history information of the location of the subject.

The memory unit 45 includes a volatile memory, and is used to hold (temporarily store) data necessary for the AI image processing unit 44 to perform the AI image processing. Specifically, the memory unit 45 is used to hold an AI model, AI-based software, and firmware necessary for the AI image processing unit 44 to perform the AI image processing. Furthermore, the memory unit 45 is also used to hold data used for processing performed by the AI image processing unit 44 using the AI model.

In the present example, the memory unit 45 is also used to hold captured image data processed by the image signal processing unit 42.

The computer vision processing unit 46 performs rule-based image processing as image processing on the captured image data. Examples of the rule-based image processing given here include super-resolution processing and the like.

The communication interface 47 is an interface that communicates with each unit connected over the bus 37, such as the control unit 33 and the memory unit 34 located outside the image sensor 30. For example, the communication interface 47 performs communication for acquiring the AI-based software, the AI model, and the like used by the AI image processing unit 44 from the outside under the control of the in-sensor control unit 43.

Furthermore, result information of the AI image processing performed by the AI image processing unit 44 is output to the outside of the image sensor 30 via the communication interface 47.

### <2. System abuse prevention processing as embodiment>

In the present embodiment, the server device 1 performs various types of processing for preventing the information processing system 100 including the camera 3 serving as the AI camera from being abused.

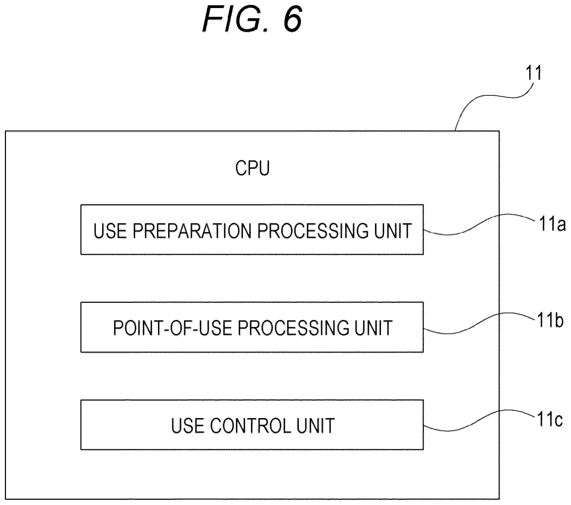

Fig. 6 is a functional block diagram illustrating a function related to system abuse prevention of the CPU 11 of the server device 1.

As illustrated in the drawing, the CPU 11 functions as a use preparation processing unit 11a, a point-of-use processing unit 11b, and a use control unit 11c.

The use preparation processing unit 11a performs processing related to preparation for the user to receive a service provided by the information processing system 100.

Here, in the present example, in order to receive the service provided by the information processing system 100, the user purchases the camera 3 as a compatible product that can be used with the information processing system 100. At this time, in the camera 3 as the compatible product, information as a "master key" that is used for generating a key for encrypting and decrypting an AI model and AI-based software is stored in the image sensor 30 at the time of manufacturing the image sensor 30, for example. This master key is stored in a predetermined non-volatile memory in the image sensor 30, such as the non-volatile memory unit 43m in the in-sensor control unit 43.

As described above, the master key that is used for encrypting/decrypting an AI model and AI-based software is stored in the image sensor 30, enabling only the image sensor 30 to decrypt an AI model and AI-based software purchased by a certain user. In other words, it is possible to prevent the other image sensors 30 from unauthorized use of the AI model and the AI-based software.

As a procedure before the point of use, the user performs a registration procedure for the purchased camera 3 and a user account.

Specifically, the user connects all the purchased cameras 3 the user desires to use to a designated cloud, that is, the server device 1 in the present example, over the network.

In this state, the user inputs information for registering each camera 3 and the user account to the server device 1 (the above-described account service function F2) using the user terminal 2.

The use preparation processing unit 11a generates account information of the user on the basis of information input from the user. Specifically, the account information including at least a user ID and password information is generated.

Furthermore, the use preparation processing unit 11a generates the account information of the user, acquires a sensor ID (ID of the image sensor 30), a camera ID (ID of the camera 3), Region information (information regarding a location where the camera 3 is installed), hardware type information (for example, whether a camera that obtains a gray-scale image or a camera that obtains a distance image, or the like), memory free space information (in the present example, the free space of the memory unit 45), OS version information, and the like from the connected camera 3 using the device monitoring function F3 described above, and performs processing of associating the acquired information with the generated account information.

Furthermore, the use preparation processing unit 11a performs processing of assigning an ID to the camera 3 of the user whose account has been registered using the license authorization function F1 described above. That is, a corresponding device ID is issued for each connected camera 3, and is associated with the camera ID described above, for example. This allows the server device 1 to identify each camera 3 using the device ID.

Moreover, the use preparation processing unit 11a performs processing corresponding to acceptance of purchase of the AI-based software and the AI model or purchase of the AI-based software and the AI model from the user. That is, in a case where the processing of accepting the purchase of the AI-based software and the AI model is performed, and the AI-based software and the AI model are purchased in the above-described marketplace, processing of associating the purchased AI-based software and AI model with the user ID is performed.

Furthermore, the use preparation processing unit 11a performs processing of encrypting the AI-based software and the AI model purchased by the user. In the present example, this encryption processing is performed with a different key for each image sensor 30. The encryption using a key different for each image sensor 30 allows the AI-based software and the AI model to be securely deployed.

In the present example, the key that is used to encrypt the AI-based software and the AI model is generated by multiplying the above-described master key stored in advance for each image sensor 30, the sensor ID, the user ID, the respective IDs of the AI-based software and the AI model to be encrypted (referred to as "software ID" and "AI model ID", respectively).

Note that the master key is prepared in advance by a service operator responsible for managing the server device 1 and stored in the image sensor 30 as a compatible product. It is therefore possible for the server device 1 side to grasp a correspondence indicating as to which master key is stored in which image sensor 30 and to use the master key for key generation for each image sensor 30 as described above.

The use preparation processing unit 11a encrypts the AI-based software and the AI model purchased by the user using the key generated for each image sensor 30 as described above. As a result, encrypted data for each image sensor 30 encrypted with different keys is obtained as encrypted data of the AI-based software and the AI model.

The point-of-use processing unit 11b performs processing corresponding to the point of use of the camera 3. Specifically, in a case where the user makes a request to deploy the purchased AI-based software and AI model to the camera 3, processing of deploying the encrypted data of corresponding AI-based software and AI model to a corresponding camera 3 is performed. That is, the processing is processing of transmitting the corresponding encrypted data to the corresponding camera 3 (image sensor 30).

Upon receipt of the encrypted data of the AI-based software and AI model, the image sensor 30 causes, for example, the in-sensor control unit 43 to generate a key using the master key, the sensor ID, the software ID, and the AI model ID, and decrypts the received encrypted data on the basis of the generated key.

Here, the user ID is stored in the image sensor 30 at least before the decryption of the AI-based software and the AI model. For example, in response to the registration of the user account described above, the server device 1 notifies the image sensor 30 of the user ID, and the user ID is stored in the image sensor 30. Alternatively, in a case where it is required to input the user ID into the camera 3 in order to enable the camera 3 purchased by the user, the user ID input by the user is stored in the image sensor 30.

Furthermore, the software ID and the AI model ID are transmitted from the server device 1 side in response to the deployment, for example, and the in-sensor control unit 43 generates a key using the software ID and the AI model ID, the user ID stored in advance as described above, and the master key stored in the non-volatile memory unit 43m, and decrypts the received encrypted data using the key.

Note that, in the above description, the example where the master key is a value unique to the image sensor 30 has been described, or alternatively, a common value can be assigned to the plurality of image sensors 30, such as a common value for each model (type) of the image sensor 30. For example, when the master key is unique to each user, the already purchased AI-based software and AI model can be used even in a newly purchased camera 3 as long as the user is the same.

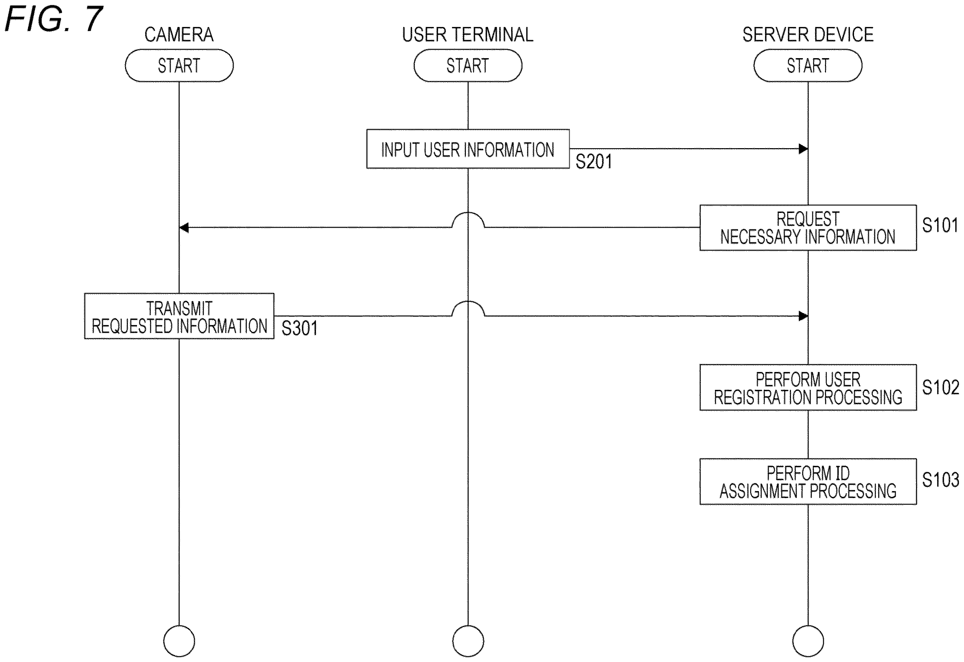

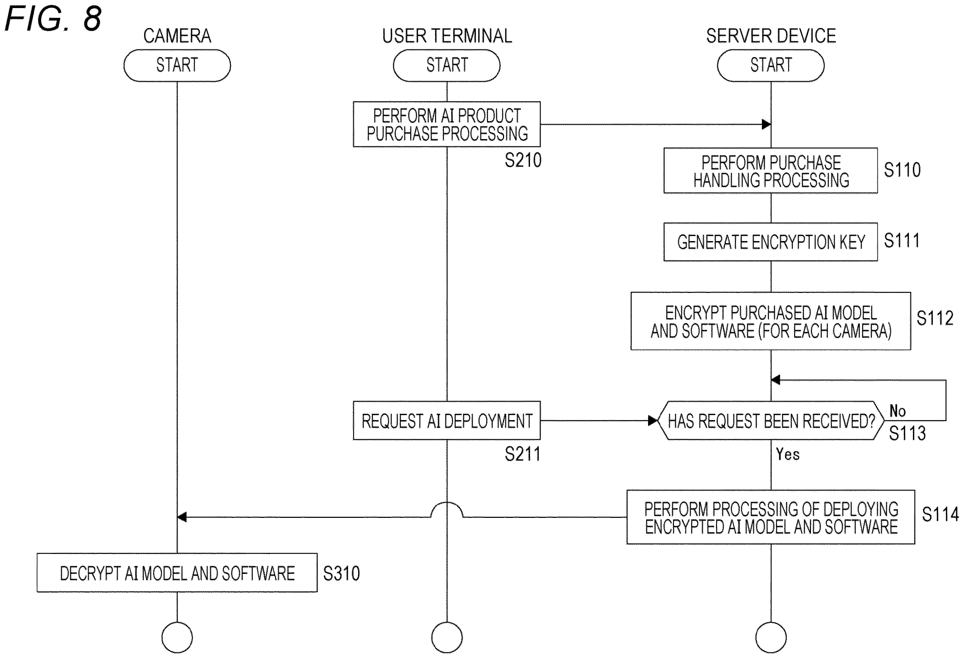

Here, for confirmation, Figs. 7 and 8 each illustrate, as a flowchart, an overall processing flow of the information processing system 100 corresponding to a case where the processing of the use preparation processing unit 11a and the point-of-use processing unit 11b described above is performed.

Fig. 7 is a flowchart of processing corresponding to the registration of the user account, and Fig. 8 is a flowchart of processing corresponding to from purchase to deployment of the AI-based software and the AI model.

In Figs. 7 and 8, processing indicated as "server device" is processing that is performed by the CPU 11 of the server device 1, and processing indicated as "camera" is processing that is performed by the in-sensor control unit 43 of the camera 3. Note that the processing indicated as "user terminal" is performed by the CPU of the user terminal 2.

Note that, at the start of the processing illustrated in Figs. 7 and 8, it is assumed that the user terminal 2 and the camera 3 are communicatively connected to the server device 1 over the network 5.

In Fig. 7, the user terminal 2 performs user information input processing in step S201. That is, the processing is processing of inputting information for account registration (at least information of the user ID and the password) to the server device 1 on the basis of the operation input by the user.

The server device 1 receives information input from the user terminal 2, and requests the camera 3 to transmit information necessary for account registration in step S101. Specifically, a request to transmit the sensor ID, the camera ID, the Region information, the hardware type information, the memory free space information (the free space of the memory unit 45), the OS version information, and the like to be associated with the user ID is made.

The camera 3 performs processing of transmitting information requested by the server device 1 to the server device 1 as request information transmission processing in step S301.

Upon receipt of the request information from the camera 3, the server device 1 performs, as the user registration processing in step S102, processing of generating account information on the basis of the user information input from the user terminal 2 and processing of associating the request information received from the camera 3 with the user ID.

Then, in step S103 subsequent to step S102, the server device 1 performs ID assignment processing. That is, processing of assigning, using the license authorization function F1 described above, an ID to the camera 3 of the user whose account has been registered, specifically, processing of issuing a corresponding device ID for each connected camera 3 and associating the device ID with, for example, the camera ID described above is performed.

Next, the processing illustrated in Fig. 8 will be described.

First, the user terminal 2 performs AI product purchase processing in step S210. That is, the processing is processing of purchasing the AI-based software and the AI model in the above-described marketplace. Specifically, as the processing in step S210, the user terminal 2 instructs, on the basis of the operation input by the user, the server device 1 to indicate the AI-based software and the AI model to be purchased, instructs the server device 1 to purchase the AI-based software and the AI model, and the like.

As purchase handling processing in step S110, the server device 1 performs processing of associating, with the user as a purchaser, a product (the AI-based software and the AI model) of which the instruction for purchase has been given from the user terminal 2. Specifically, processing of associating, with the user ID of the user as a purchaser, the ID of the AI-based software and the ID of the AI model (software ID and AI model ID) of which the instruction for purchase has been given is performed.

In step Sill subsequent to step S110, the server device 1 generates an encryption key. That is, a key is generated by multiplying the sensor ID acquired from the camera 3 side in the processing in Fig. 7 described above, the master key of the camera 3 (image sensor 30), the user ID of the user as a purchaser, and the software ID and the AI model ID of the purchased AI-based software and AI model.

In step S112 subsequent to step Sill, the server device 1 encrypts the purchased AI model and software. Specifically, the purchased AI model and AI-based software are encrypted using the key generated in step Sill.

As described above, in the present example, since the master key is used to generate the encryption key, in a case where there is a plurality of target cameras 3, the key is generated for each camera 3 (for each image sensor 30), and encrypted data for each camera 3, each piece of which is encrypted with a different key, is generated as the encrypted data.

After the processing related to the purchase of the AI product as described above is performed, in a case where the user desires to start image processing using the purchased AI-based software and AI model in each camera 3, the user makes a deployment request to the server device 1 using the user terminal 2 ("AI deployment request" in step S211).

After performing the processing in step S112 described above, the server device 1 waits for the deployment request in step S113.

Upon receipt of the deployment request, the server device 1 performs processing of deploying the encrypted AI model and AI-based software in step S114. That is, processing of transmitting the encrypted data obtained in step S112 to a corresponding camera 3 (image sensor 30) is performed.

Upon receipt of the encrypted data transmitted from the server device 1, the camera 3 performs processing of decrypting the AI model and the AI-based software in step S310. That is, a key is generated by multiplying the master key stored in the non-volatile memory unit 43m, the sensor ID, the user ID, the AI model ID, and the software ID, and the decryption processing is performed on the encrypted data using the generated key so as to decrypt the AI-based software and the AI model.

The description is returned to Fig. 6.

In Fig. 6, the use control unit 11c monitors the use state of the camera 3 to which the AI-based software and the AI model have been deployed, and performs disabling processing of disabling at least the use of the AI model on the basis of the monitoring result. Specifically, the use control unit 11c determines whether or not the use state of the camera 3 corresponds to a specific use state, and performs, in a case where the use state is determined to correspond to the specific use state, the disabling processing of making the camera 3 unable to use the AI model.

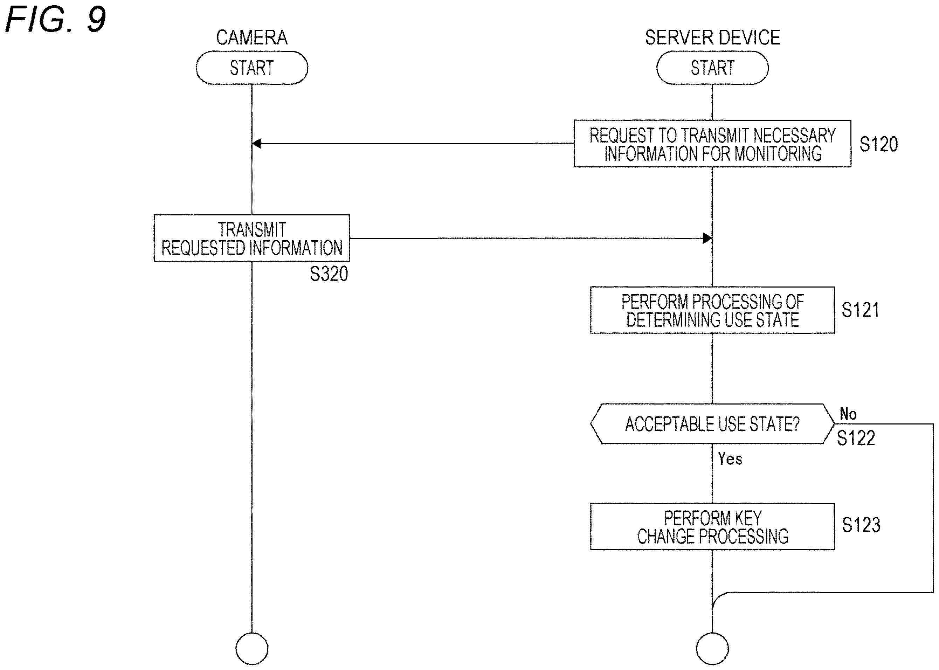

A specific processing example of the use control unit 11c will be described with reference to the flowchart in Fig. 9.

In Fig. 9, processing indicated as "server device" is performed by the CPU 11 of the server device 1, and processing indicated as "camera" is performed by, for example, the in-sensor control unit 43 of the camera 3.

First, in step S120, the server device 1 request the camera 3 to transmit necessary information for monitoring. That is, a request to transmit necessary information required for monitoring the use state of the camera 3 is made.

Examples of the necessary information for monitoring given here include output data of image processing using the AI model, output information (for example, information such as position, altitude, temperature, and motion) of various types of sensors included in the sensor unit 36 of the camera 3, and free space information of the memory unit 45 (that is, a memory used by AI image processing).

Here, it is possible to grasp, depending on the output data of the AI image processing, the data content, the data type, the data size, the data output frequency, and the like. Furthermore, it is possible to grasp, depending on the outputs of the various types of sensors included in the camera 3, the environment, situation, and the like where the camera 3 is placed. Furthermore, it is possible to presume, depending on the free space information of the memory unit 45, what kind of processing is being performed as image processing using the AI model.

In response to the transmission request from the server device 1 in step S120, the camera 3 performs processing of transmitting the above-described necessary information to the server device 1 as processing of transmitting the requested information in step S320.

In response to the reception of the necessary information from the camera 3, the server device 1 performs processing of determining the use state of the camera 3 using at least one of the various types of information exemplified above as processing of determining the use state in step S121.

For example, in a case where information related to a location is used, it is determined whether or not the location where the camera 3 is used is away from a predetermined intended use location (for example, a location where the camera 3 is intended to be used that is notified in advance by the user or the like) by a certain distance or more. When the distance is greater than or equal to the certain distance, the use state of the camera 3 can be determined to be an unacceptable use state.

Furthermore, in a case where the information regarding an altitude is used, it is conceivable to determine whether or not the altitude is different by a certain value or more from an altitude (intended use altitude) corresponding to the intended use location of the camera 3 (for example, the location where the camera 3 is intended to be used that is notified in advance by the user or the like). In a case where the altitude is different from the intended use altitude by a certain value or more, it can be presumed that the camera 3 is not used in an intended location (for example, a case where the camera 3 is mounted and used on a flying object such as a drone, although the camera 3 should be installed indoors or the like). That is, the use state can be determined to be an unacceptable use state.

Moreover, in a case where the information regarding a temperature is used, it is conceivable to determine whether or not the temperature is different by a certain value or more from a temperature (intended use temperature) corresponding to the intended use location of the camera 3. In a case where the temperature is different from the intended use temperature by a certain value or more, it is presumed that the use location is different from the intended use location, so that the use state can be determined to be an unacceptable use state.

Furthermore, in a case where the information regarding a motion of the camera 3 is used, it is conceivable to determine whether or not the motion is different from a motion intended on the basis of a predetermined intended use environment of the camera 3 (for example, indoor installation, installation on a moving object, or the like). For example, in a case where the motion of the camera 3 is detected even though the camera 3 is installed indoors, the use state can be determined to be an unexpected use sate and an unacceptable use state.

Furthermore, in a case where the output data of the AI image processing is used, it is conceivable to determine whether or not the output frequency of the output data is different by a certain value or more from an output frequency (intended output frequency) intended on the basis of a predetermined use purpose of the camera 3. In a case where the output frequency of the output data of the AI image processing is different by a certain value or more from the intended output frequency, the use purpose of the camera 3 can be presumed to be different from the intended use purpose, and the use state can be determined to be an unacceptable use state.

Furthermore, in a case where the output data of the AI image processing is used, the use state of the camera 3 can be presumed on the basis of the data content. For example, in a case where the output data is image data, it is possible to determine whether or not the use location, the use environment, and the use purpose of the camera 3 coincide with the intended use location, the intended use environment, and the intended use purpose from the image content, and it is possible to determine whether or not the use state of the camera 3 is an acceptable use state.

Moreover, in a case where the free space information of the memory unit 45 is used, it is conceivable to determine whether or not the free space is different by a certain value or more from a free space (intended free space) intended on the basis of the use purpose of the camera 3. In a case where the free space of the memory unit 45 is different by a certain value or more from the intended free space, for example, the use purpose of the camera 3 can be presumed to be different from the intended use purpose of the camera 3, and the use state can be determined to be an unacceptable use state.

In step S122 subsequent to step S121, the server device 1 determines whether or not the use state is an acceptable use state. That is, the server device 1 determines whether or not the use state of the camera 3 is an acceptable use state on the basis of the result of the use state determination processing in step S121.

Note that, in the above description, the example where the use state of the camera 3 is determined on the basis of only one piece of information has been described, or alternatively, comprehensive use state determination can also be performed on the basis of a plurality of pieces of information. For example, it is conceivable that in a case where the result of the use state determination using information related to a location and the result of the use state determination using information related to an altitude both indicate an acceptable use state, a determination result that the use state is an acceptable use state is obtained, and in a case where either of the results indicates an unacceptable use state, a determination result that the use state is not an acceptable use state is obtained. Alternatively, it is also conceivable that in a case where the result of the use state determination on the basis of the motion information further indicates an acceptable use state, a determination result that the use state is an acceptable use state is obtained, and in a case where any one of the results indicates an unacceptable use state, a determination result that the use state is not an acceptable use state is obtained.

In a case where the use state of the camera 3 is determined not to be an acceptable use state in step S122, the server device 1 proceeds to step S123 and performs key change processing. That is, the key change processing is processing of changing a key used to encrypt the AI-based software and the AI model.

Specifically, as the key change processing, the server device 1 changes, to another key, at least any key selected from a group including the sensor ID, the user ID, the software ID, and the AI model ID except the master key, the master key, the sensor ID, the user ID, the software ID, and the AI model ID being used for key generation, and generates a new key by multiplying the keys including the changed key.

Here, the keys including the sensor ID, the user ID, the software ID, and the AI model ID except the master key described above each correspond to a "designated key" designated to be used to generate key information for decrypting the encrypted AI-based software and the AI model.

In the present embodiment, the memory unit 45 in which the AI model is stored is a volatile memory, in a case where the camera 3 is rebooted, it is necessary to redeploy the AI-based software and the AI model from the server device 1. Therefore, in a case where the key used to encrypt the AI model and the AI-based software is changed as described above, the camera 3 (image sensor 30) becomes unable to decrypt the AI-based software and the AI model. That is, the camera 3 becomes unable to perform image processing using the AI model.

Note that, although not illustrated in the drawing, in a case where the encryption key is changed as described above, the server device 1 encrypts, in response to the subsequent deployment request from the camera 3, the AI-based software and the AI model with the changed key and transmits the encrypted AI-based software and AI model to the camera 3.

Here, in the above description, the example where as the determination of the use state of the camera 3, the use state determination using the information acquired from the camera 3 is performed has been described, or alternatively, the use state determination can also be performed on the basis of information other than the information acquired from the camera 3.

For example, the use state determination can be performed on the basis of information regarding an Internet protocol (IP) address assigned to the camera 3 for communication over the network 5. In this case, for example, it is conceivable to determine whether or not the location of the camera 3 specified from the IP address is different from a predetermined location.

Alternatively, the use state determination can be performed on the basis of payment information regarding the purchase price for the AI-based software and the AI model. Accordingly, for example, in a case where the user has not paid the specified purchase price, it is possible to make the camera 3 unable to use the AI model.

Note that a state where the user uses the camera 3 without paying the specified purchase price can be said to be a use state where the purchase price is unpaid and an improper use state.

Furthermore, it is also conceivable that the use state determination is performed on the basis of information indicating which AI model is in use by the camera 3. For example, in a case where an AI model that is not in deployment history is in use, the use state of the camera 3 can be determined to be an unauthorized use state, and in this case, it is conceivable to disable the use of the AI model.

### <3. Output data security processing as embodiment>

Next, output data security processing that is performed on the camera 3 side will be described.

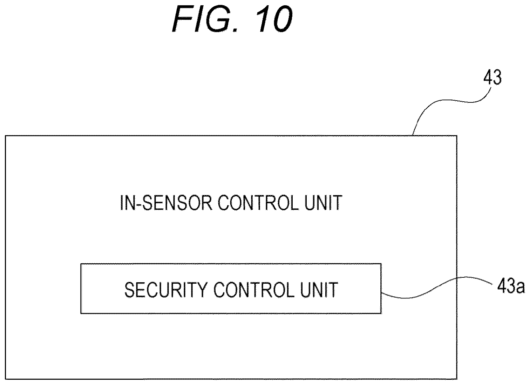

Fig. 10 is a functional block diagram for describing a function related to security control of the in-sensor control unit 43 of the camera 3.

As illustrated in the drawing, the in-sensor control unit 43 includes a security control unit 43a.

The security control unit 43a performs control to switch, on the basis of the output data of the image processing performed using the AI model, a level of the security processing performed on the output data.

The security processing described herein refers to processing for enhancing safety from the viewpoint of preventing data content leakage or spoofing, such as processing of encrypting target data or processing of attaching electronic signature data for authenticity determination to target data. The switching of the level of the security processing means switching of a level of safety from such a viewpoint of preventing data content leakage or spoofing.

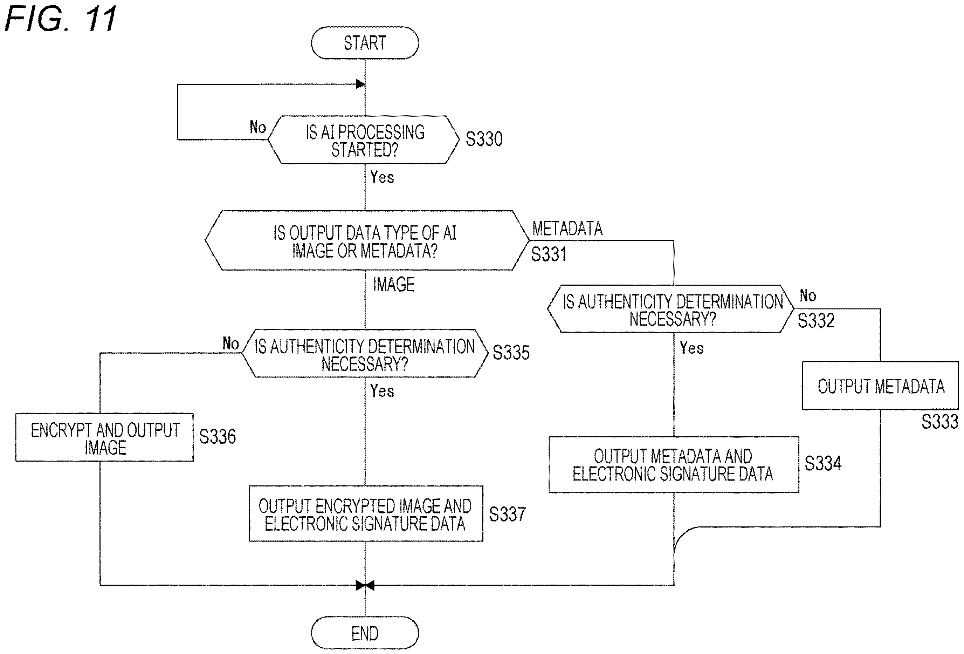

Fig. 11 is a flowchart illustrating an example of specific processing that is performed by the security control unit 43a.

In Fig. 11, the in-sensor control unit 43 waits for AI processing to start in step S330. That is, the AI image processing unit 44 illustrated in Fig. 5 waits for image processing using the AI model to start.

In a case where the AI processing is started, the in-sensor control unit 43 determines in step S331 whether or not the output data type of the AI is an image or metadata. That is, it is determined whether the output data type of the image processing using the AI model is an image or metadata.

Here, examples of the AI model include an AI model that outputs image data as result information of the AI image processing and an AI model that outputs metadata (attribute data). In this case, possible examples of the image data include image data of a recognized face, whole body, half body, or the like in a case where the subject is a person, image data of a recognized license plate in a case where the subject is a vehicle, and the like. Furthermore, possible examples of the metadata include text data representing attribute information such as age (or age group) and gender of the subject as a target, and the like.

The image data is highly specific information such as an image of a target face, so that the image data can be said to be data that is prone to contain personal information of the subject. On the other hand, the metadata tends to be abstracted attribute information as exemplified above, and can be said to be data that is less prone to contain personal information.

In a case where the output data type of the AI is determined to be metadata in step S331, the in-sensor control unit 43 proceeds to step S332 and determines whether or not authenticity determination is necessary.

Here, the output data of the image processing performed by the camera 3 using the AI model is also presumed to be used for, for example, processing of authenticating a face of a person as a target. In this case, it is assumed that the output data is transmitted to a device located outside the image sensor 30 such as the server device 1, and the external device performs the face authentication processing, but in this case, when a device impersonating the authorized image sensor 30 transmits dummy data for face authentication to the external device, the face authentication may be passed fraudulently.

Therefore, in the information processing system 100 of the present example, a private key for generating electronic signature data is stored in the camera 3 so as to enable the authenticity determination of the output data of the image processing using the AI model in the camera 3.

In step S332, whether or not the authenticity determination of the output data is necessary is determined as, for example, determination as to whether or not the output data is used for predetermined authentication processing such as the face authentication processing as exemplified above. Specifically, from the content of the output data, it is determined whether or not the output data is data used for authentication processing such as the face authentication processing. This processing can be performed, for example, as determination as to whether or not a combination of attribute items included in the metadata is a predetermined combination.

In a case where it is determined that the authenticity determination is not required, the in-sensor control unit 43 proceeds to step S333, performs the processing of outputting the metadata, and brings the series of processing illustrated in Fig. 11 to an end.

That is, in this case, the output data is not image data but metadata (that is less prone to contain personal information), and it is determined that the authenticity determination is not required for the metadata, so that the processing of outputting the metadata as the output data of the AI image processing as it is (outputting at least to the outside of the image sensor 30) is performed.

On the other hand, in a case where it is determined in step S332 that the authenticity determination of the output data is necessary, the in-sensor control unit 43 proceeds to step S334, performs processing of outputting the metadata and the electronic signature data, and brings the series of processing illustrated in Fig. 11 to an end. That is, processing of generating the electronic signature data on the basis of the metadata as the output data and the above-described private key and outputting the metadata and the electronic signature data is performed.

As a result, in a case where the output data is not image data but metadata, and it is determined that authenticity determination is necessary for the metadata, the electronic signature data for authenticity determination is output together with the metadata.

Furthermore, in step S331 described above, in a case where it is determined that the output data type of the AI is an image, the in-sensor control unit 43 proceeds to step S335 and determines whether or not authenticity determination is necessary. The determination as to whether or not authenticity determination of the image data is necessary can be performed, for example, on the basis of the content of the image data. Specifically, from the content of the image data as the output data, it is determined whether or not the output data is data used for authentication processing such as face authentication processing. This processing can be performed, for example, as determination as to whether or not a subject (for example, a face, an iris, or the like) used for authentication processing is included in the image data.

In a case where it is determined that authenticity determination is not required, the in-sensor control unit 43 proceeds to step S336, performs processing of encrypting and outputting the image, and brings the series of processing illustrated in Fig. 11 to an end.

That is, in this case, the output data is encrypted, but the electronic signature data for authenticity determination is not output.

Furthermore, in a case where it is determined in step S335 that authenticity determination is necessary, the in-sensor control unit 43 proceeds to step S337, performs processing of outputting the encrypted image and the electronic signature data, and brings the series of processing illustrated in Fig. 11 to an end.

As a result, the output data is encrypted for a case where the output data is image data that is prone to contain personal information, and the electronic signature data is output together with the output data for a case where authenticity determination is necessary.

Note that, in the above description, the example where the determination as to whether or not to perform encryption is performed as the determination as to whether or not the output data is an image has been described, or alternatively, the determination can be performed on the basis of the content of the output data. For example, in a case where the output data is image data, it is possible to determine whether or not encryption is necessary from the content of the image (for example, whether or not the output data is prone to contain personal information). Specifically, in a case where the face of the person is included in the image, it is determined that the encryption is necessary, and in a case where the face is not included, it is determined that the encryption is not necessary.

Furthermore, in the above description, switching between two levels, that is, switching whether or not to perform encryption is performed as the switching of the encryption level, but the switching of the encryption level can be performed as switching among three or more levels.

For example, in a case where the encryption level is switched among three or more levels, the necessary encryption level is determined in accordance with the number of subjects that requires protection included in the output data as the image data. As a specific example, for example, in a case where only one face of a person is included in the image, only the face portion is encrypted, in a case where two faces are included, only the two face portions are encrypted, and in a case where three faces are included, only the three face portions are encrypted.

In this case, the amount of data to be encrypted is switched among three or more levels.

Furthermore, it is also possible to determine whether or not encryption is necessary or determine which level is requested as the encryption level on the basis of the size of the subject in the image. That is, in a case where the size of the subject in the image is greater than or equal to a predetermined size, it is determined that the encryption is performed, or the encryption level is increased as the size of the subject in the image increases.

### <4. Modification>

Note that the embodiment is not limited to the specific example described above, and may be configured as various modifications.

### (4-1. Connection between cloud and edge)

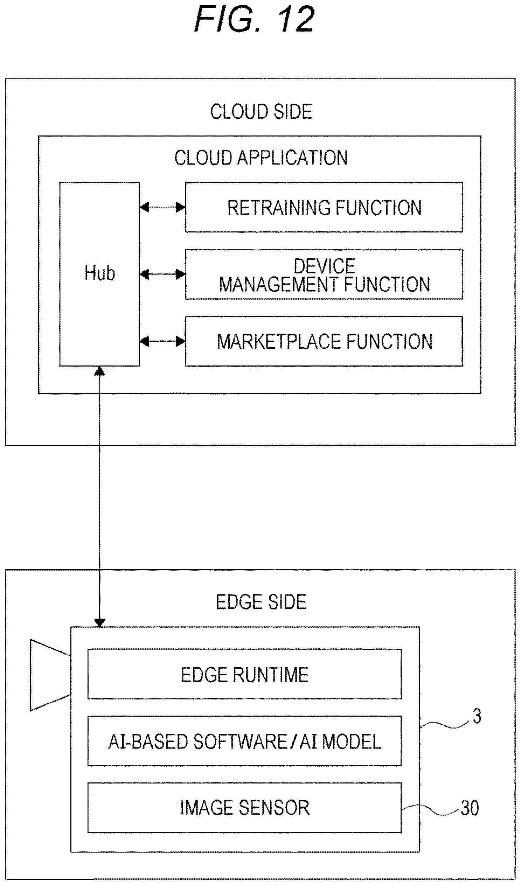

For example, a mode as illustrated in Fig. 12 can be applied to connection between the server device 1 that is the cloud-side information processing device and the camera 3 that is the edge-side information processing device.

A retraining function, a device management function, and a marketplace function that are functions available via a Hub are implemented in the cloud-side information processing device. The Hub performs secure and highly reliable communication with the edge-side information processing device. Accordingly, various functions can be provided to the edge-side information processing device.

The retraining function is a function of providing a newly optimized AI model by performing retraining as described above, and accordingly, a suitable AI model based on a new training material is provided.

The device management function is a function of managing the camera 3 and the like serving as the edge-side information processing device, and can provide, for example, functions such as a function of managing and monitoring the AI model loaded in the camera 3, and function of detecting and troubleshooting a problem.

Moreover, the device management function protects secure access made by an authenticated user.

The marketplace function provides a function of registering the AI model developed by the AI model developer and the AI-based software developed by the software developer as described above, a function of loading such a developed product into an authorized edge-side information processing device, and the like. Furthermore, the marketplace function also provides a function related to payment of an incentive in response to the loading of the developed product.

The camera 3 serving as the edge-side information processing device includes an edge runtime, AI-based software, an AI model, and the image sensor 30.

The edge runtime functions as embedded software or the like for managing software deployed to the camera 3 or communicating with the cloud-side information processing device.

As described above, the AI model is obtained by deploying an AI model registered in the marketplace in the cloud-side information processing device, so that the camera 3 can obtain the result information of the AI image processing according to the purpose using the captured image.

### (4-2. Sensor structure)

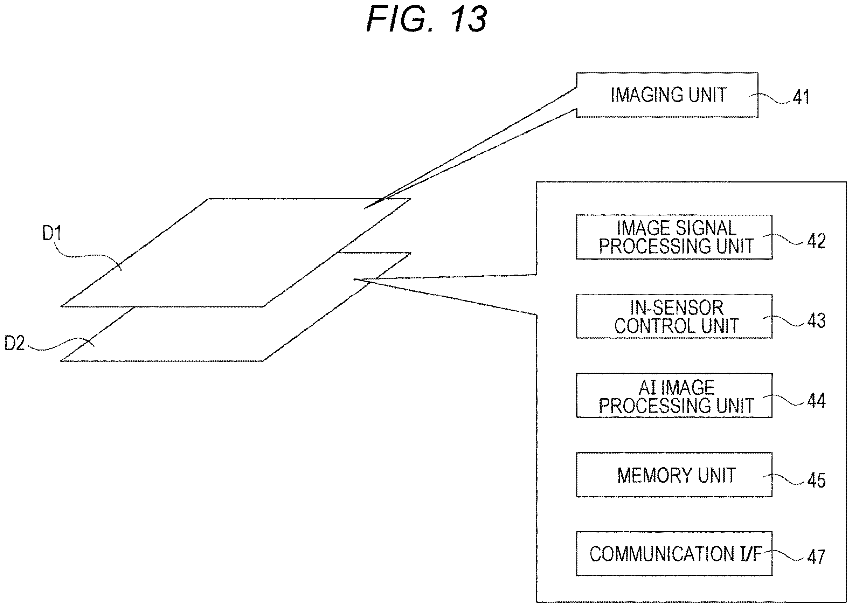

There are various possible structures of the image sensor 30, and here, a two-layer structure as illustrated in Fig. 13 will be described as an example.

In Fig. 13, the image sensor 30 in this case is configured as a one-chip semiconductor device in which two dies D1 and D2 are stacked on top of each other. The die D1 is a die in which the imaging unit 41 (see Fig. 5) is formed, and the die D2 is a die including the image signal processing unit 42, the in-sensor control unit 43, the AI image processing unit 44, the memory unit 45, the computer vision processing unit 46, and the communication I/F 47.

The die D1 and the die D2 are electrically connected by a chip-to-chip bonding technique such as Cu-Cu bonding.

### (4-3. Deployment using container technology)

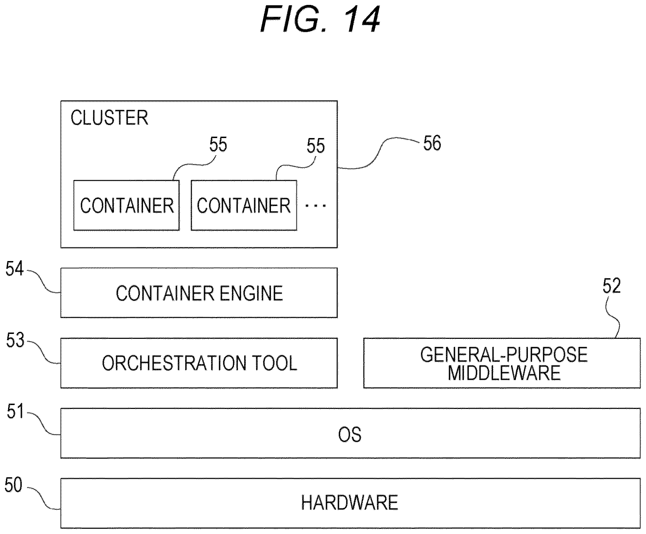

Furthermore, there are various possible methods for deploying the AI model and the AI-based software to the camera 3. An example using a container technology will be described with reference to Fig. 14.

As illustrated in Fig. 14, in the camera 3, an operating system 51 is installed on various types of hardware 50 such as a CPU or a graphics processing unit (GPU) as the control unit 33 illustrated in Fig. 5, a ROM, and a RAM.

The operating system 51 is basic software responsible for overall control of the camera 3 in order to realize various functions in the camera 3.

A general-purpose middleware 52 is installed on the operating system 51. The general-purpose middleware 52 is, for example, software realizing basic operations such as a communication function using the communication unit 35 serving as the hardware 50 and a display function using a display unit (such as a monitor) serving as the hardware 50.

On the operating system 51, not only the general-purpose middleware 52 but also an orchestration tool 53 and a container engine 54 are installed.

The orchestration tool 53 and the container engine 54 constructs a cluster 56 as a runtime environment of containers 55 and load and run the containers 55.

Note that the edge runtime illustrated in Fig. 12 corresponds to the orchestration tool 53 and the container engine 54 illustrated in Fig. 14.

The orchestration tool 53 has a function of causing the container engine 54 to appropriately allocate resources of the above-described hardware 50 and operating system 51. Each container 55 is collected into a predetermined unit (pod to be described below) by the orchestration tool 53, and each pod is loaded into a worker node (to be described below) that is a logically different area.

The container engine 54 is one of pieces of middleware installed in the operating system 51 and is an engine that make the container 55 operate. Specifically, the container engine 54 has a function of allocating resources (memories, calculation capacities, and the like) of the hardware 50 and the operating system 51 to the containers 55 on the basis of configuration files or the like included in the middleware inside the containers 55.

Furthermore, in the present embodiment, the allocated resources include not only resources such as the control unit 33 included in the camera 3 but also resources such as the in-sensor control unit 43, the memory unit 45, and the communication I/F 47 included in the image sensor 30.

The container 55 includes an application for realizing a predetermined function and middleware such as a library.

The container 55 operates to realize the predetermined function using resources of the hardware 50 and the operating system 51 allocated by the container engine 54.

In the present embodiment, the AI-based software and the AI model illustrated in Fig. 12 correspond to one of the containers 55. That is, one of the various containers 55 deployed to the camera 3 realizes a predetermined AI image processing function using the AI-based software and the AI model.

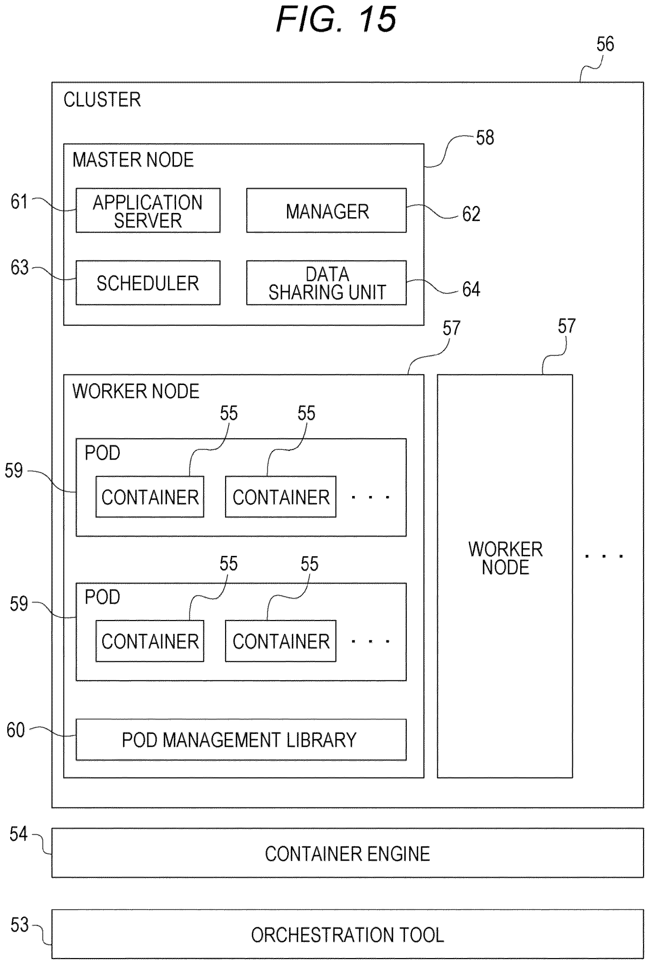

With reference to Fig. 15, a specific configuration example of the cluster 56 constructed by the container engine 54 and the orchestration tool 53 will be described.

Note that the cluster 56 may be constructed across a plurality of devices such that functions are realized using not only the resources of the hardware 50 included in one camera 3 but also resources of other hardware included in the other devices.

The orchestration tool 53 manages the runtime environment of the container 55 on a per-worker node 57 basis. Furthermore, the orchestration tool 53 constructs a master node 58 that manages all of the worker nodes 57.

In each worker node 57, a plurality of pods 59 is loaded. Each pod 59 includes one or a plurality of containers 55 and realizes a predetermined function. The pod 59 is a management unit managing the container 55 by the orchestration tool 53.

The pod 59 in the worker node 57 operates under the control of a pod management library 60.

The pod management library 60 includes a container runtime that causes the pod 59 to use logically allocated resources of the hardware 50, an agent that is subject to control from the master node 58, and a network proxy that is responsible for communication between the pods 59, communication with the master node 58, and the like.

That is, the pod management library 60 allows each pod 59 to realize a predetermined function using each resource.

The master node 58 includes an application server 61 that loads the pod 59, a manager 62 that manages how the container 55 is loaded by the application server 61, a scheduler 63 that determines a worker node 57 in which the container 55 is placed, and a data sharing unit 64 that performs data sharing.

The use of the components illustrated in Figs. 14 and 15 allows the above-described AI-based software and AI model to be loaded into the image sensor 30 of the camera 3 using the container technology.

Note that, as described above, the configuration where the AI model is stored in the memory unit 45 in the image sensor 30 via the communication I/F 47 in Fig. 5, and the AI image processing is performed in the image sensor 30 may be employed, or alternatively, a configuration where the components illustrated in Figs. 14 and 15 are loaded into the memory unit 45 and the in-sensor control unit 43 in the image sensor 30 to run the above-described AI-based software and AI model in the image sensor 30 using the container technology may be employed.

### (4-4. Processing flow related to AI model retraining)

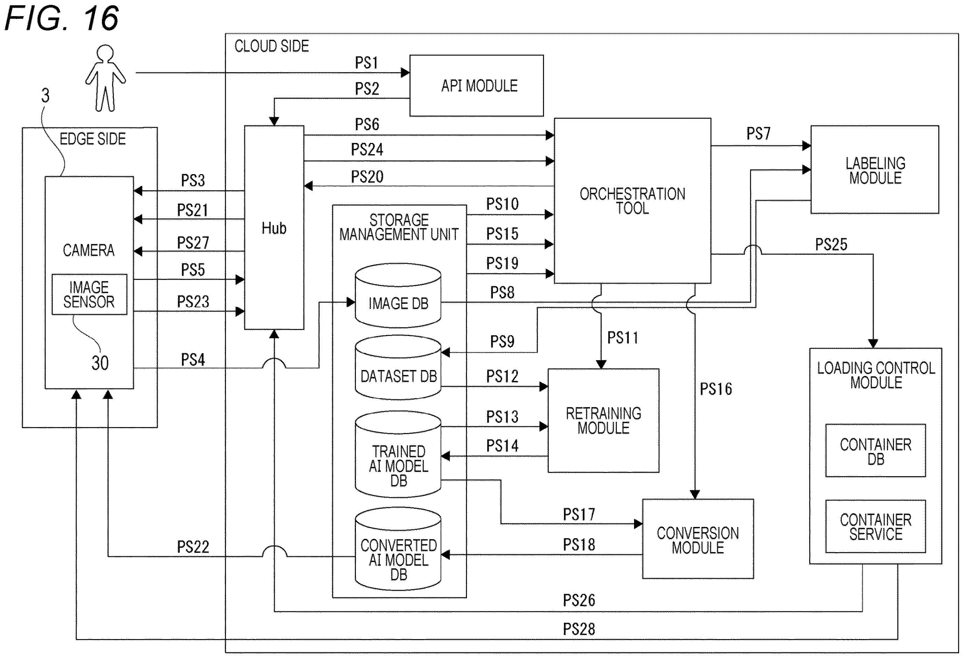

An example of a processing flow when retraining the AI model, and updating of the AI model (edge-side AI model) and the AI-based software deployed to each camera 3 will be described with reference to Fig. 16.

Here, as an example, a case where the retraining of the AI model and the update of the edge-side AI model and the AI-based software are triggered in response to an operation performed by the service provider or the user will be described.

Note that Fig. 16 is a diagram focusing on one camera 3 among the plurality of cameras 3. Furthermore, in the following description, the edge-side AI model to be updated has been deployed to the image sensor 30 included in the camera 3. Note that the edge-side AI model may be deployed to a memory provided in the camera 3 but located outside the image sensor 30.

First, in processing step PS1, the service provider or the user makes an instruction to retrain the AI model. This instruction is made using an application programming interface (API) function of an API module included in the cloud-side information processing device. Furthermore, in the instruction, an image amount (for example, the number of images) used for training is designated. Hereinafter, the number of images designated as the image amount used for retraining is also referred to as "predetermined number of images".

Upon receipt of the instruction, the API module transmits a retraining request and image amount information to a Hub (similar to the Hub illustrated in Fig. 12) in processing step PS2.

In processing step PS3, the Hub transmits an update notification and the image amount information to the camera 3 serving as the edge-side information processing device.

In processing step PS4, the camera 3 transmits captured image data obtained by capturing an image to an image database (DB) of a storage group. The imaging processing and the transmission processing are performed until the number of images reaches a predetermined number of images necessary for retraining.

Note that, in a case where the camera 3 obtains an inference result of inference processing performed on the captured image data, the camera 3 may store the inference result in the image DB as metadata of the captured image data in processing step PS4.

Since the inference result in the camera 3 is stored as metadata in the image DB, it is possible to carefully select data necessary for retraining of the AI model performed on the cloud side. Specifically, the retraining can be performed using only image data that makes the inference result in the camera 3 and a result of inference performed using abundant computer resources in the cloud-side information processing device different from each other. Therefore, a time required for retraining can be shortened.

After capturing and transmitting the predetermined number of images, the camera 3 notifies the Hub that the transmission of the predetermined number of pieces of captured image data has been completed in processing step PS5.

Upon receipt of the notification, the Hub notifies the orchestration tool that preparation of retraining data has been completed in processing step PS6.

In processing step PS7, the orchestration tool transmits an instruction to perform labeling processing to a labeling module.

The labeling module acquires image data to be subjected to the labeling processing from the image DB (processing step PS8) and performs the labeling processing.

The labeling processing described herein may be processing of performing the class identification described above, processing of estimating the gender and the age of the subject appearing in the image and attaching a label, processing of estimating the pose of the subject and attaching a label, or processing of estimating the behavior of the subject and attaching a label.

The labeling processing may be performed manually or automatically. Furthermore, the labeling processing may be completed in the cloud-side information processing device or may be realized by using a service provided by another server device.

The labeling module that has completed the labeling processing stores labeling result information in the dataset DB in processing step PS9. Here, the information to be stored in the dataset DB may be a set of label information and image data or may be image identification (ID) information for specifying image data instead of the image data itself.

Upon detection that the labeling result information has been stored, a storage management unit gives a notification to the orchestration tool in processing step PS10.

Upon receipt of the notification, the orchestration tool confirms the end of the labeling processing performed on the predetermined number of pieces of image data and transmits a retraining instruction to a retraining module in processing step PS11.

Upon receipt of the retraining instruction, the retraining module acquires the dataset used for training from the dataset DB in processing step PS12 and acquires the AI model to be updated from a trained AI model DB in processing step PS13.

The retraining module retrains the AI model using the acquired dataset and AI model. The updated AI model thus obtained is stored again in the trained AI model DB in processing step PS14.

Upon detection that the updated AI model has been stored, the storage management unit gives a notification to the orchestration tool in processing step PS15.

Upon receipt of the notification, the orchestration tool transmits, to a conversion module, an instruction to convert the AI model in processing step S16.

Upon receipt of the conversion instruction, the conversion module acquires the updated AI model from the trained AI model DB in processing step PS17 and performs processing of converting the AI model.

In the conversion processing, conversion is performed in accordance with specification information or the like of the camera 3 that is a device of a loading destination. In this processing, the AI model is downsized while minimizing performance degradation, and a file format or the like of the Al model is converted so as to enable the AI model to run on the camera 3.

The AI model converted by the conversion module is the above-described edge-side AI model. This converted AI model is stored in a converted AI model DB in processing step PS18.

Upon detection that the converted AI model has been stored, the storage management unit gives a notification to the orchestration tool in processing step PS19.

Upon receipt of the notification, the orchestration tool transmits a notification for updating the AI model to the Hub in processing step PS20. This notification includes information for specifying a location where the AI model used for the update is stored.

Upon receipt of the notification, the Hub transmits, to the camera 3, an instruction to update the AI model. The update instruction also includes information for specifying the location where the AI model is stored.

The camera 3 performs processing of acquiring and loading the corresponding converted AI model from the converted AI model DB in processing step PS22. Accordingly, the AI model in the image sensor 30 of the camera 3 is updated.

Upon the end of the update of the AI model indicated by the loading of the AI model, the camera 3 transmits an update completion notification to the Hub in processing step PS23.

Upon receipt of the notification, the Hub notifies the orchestration tool that the processing of updating the AI model in the camera 3 has been completed in processing step PS24.

Note that, in a case where only the update of the AI model is performed, this is the end of processing.

In addition to the AI model, in a case where the AI-based software using the AI model is updated, the following processing is further performed.

Specifically, in processing step PS25, the orchestration tool transmits, to a loading (deployment) control module, an instruction to download the AI-based software such as updated firmware.

The loading control module transmits, to the Hub, an instruction to deploy the AI-based software in the processing step PS26. This instruction includes information for specifying a location where the updated AI-based software is stored.

The Hub transmits the deployment instruction to the camera 3 in processing step PS27.

The camera 3 downloads and loads the updated AI-based software from a container DB of the loading control module in processing step PS28.

Note that, in the above description, the example where the update of the AI model that runs on the image sensor 30 of the camera 3 and the update of the AI-based software that runs on the camera 3 but outside the image sensor 30 are sequentially performed has been described.

In a case where both the AI model and the AI-based software run outside the image sensor 30 of the camera 3, both the AI model and the AI-based software may be collectively updated as one container. In this case, the update of the AI model and the update of the AI-based software may be performed simultaneously rather than sequentially. Then, it is possible to realize the update by performing each processing of processing steps PS25, PS26, PS27, and PS28.

Note that, even in a case where the container can be loaded into the image sensor 30 of the camera 3, it is possible to update the AI model and the AI-based software by performing each processing of processing steps PS25, PS26, PS27, and PS28.

Performing the above-described processing causes the AI model to be retrained using captured image data captured in a use environment of the user. It is therefore possible to generate the edge-side AI model capable of outputting a highly accurate recognition result in the use environment of the user.

Furthermore, even if the use environment of the user changes such as a case where the layout in the store is changed or the location where the camera 3 is installed is changed, the AI model can be appropriately retrained each time, and it is therefore possible to maintain the accuracy of recognition made by the AI model without deteriorating.

Note that each of the above-described processing may be performed not only when the AI model is retrained but also when the system is operated for the first time under the use environment of the user.

### (4-5. Screen example of marketplace)

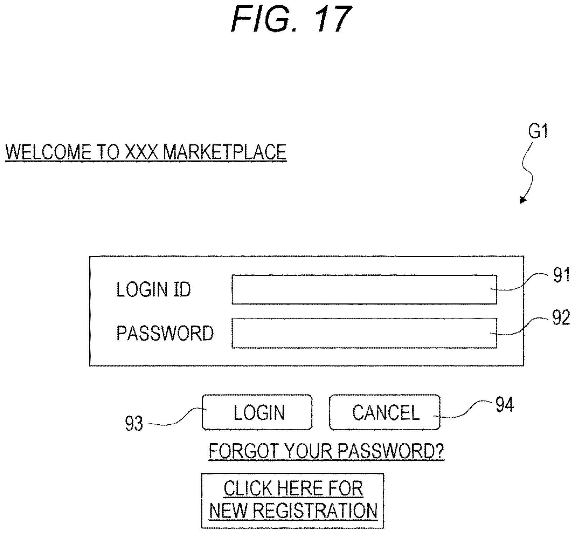

A screen example of the marketplace presented to the user will be described with reference to Figs. 17 to 19.

Fig. 17 illustrates an example of a login screen G1.

On the login screen G1, an ID input field 91 for inputting a user ID and a password input field 92 for inputting a password are provided.

A login button 93 for performing a login and a cancel button 94 for canceling a login are arranged below the password input field 92.

Furthermore, an operation element for causing a transition to a page for a user who forgets a password, an operation element for causing a transition to a page for new user registration, and the like are arranged below the login button 93 and the cancel button 94 as needed.

When an appropriate user ID and password are input and then the login button 93 is pressed, processing of causing a transition to a user-specific page is performed in each of the cloud server 1 and the user terminal 2.

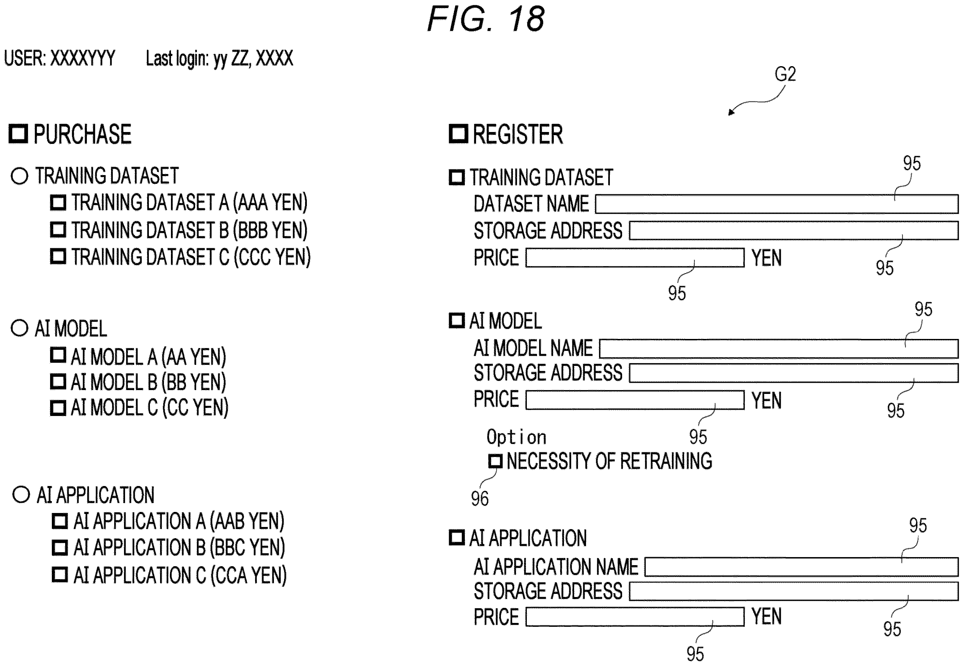

Fig. 18 illustrates an example of a developer screen G2 presented to a software developer who uses the software developer terminal 7 and an AI model developer who uses the AI model developer terminal 6.

Each developer can purchase, for development, a training dataset, an AI model, or AI-based software (denoted as "AI application" in the drawing) through the marketplace. Furthermore, AI-based software or an AI model developed by the developer him/herself can be registered in the marketplace.

On the developer screen G2 illustrated in Fig. 18, training datasets, AI models, AI-based software (AI applications), and the like available for purchase (hereinafter, collectively referred to as "data") are displayed on the left side.

Note that, although not illustrated in the drawing, when a training dataset is purchased, preparation for training can be made simply by displaying an image of the training dataset on a display, enclosing only a desired portion of the image in a frame using an input device such as a mouse, and inputting a name.

For example, in a case where it is desired to perform AI training using a cat image, it is possible to prepare an image to which a cat annotation is added for the AI training by enclosing only a cat portion of the image in a frame and inputting "cat" as a text input.

Furthermore, a purpose may be selectable so that desired data can be easily found. That is, display processing of displaying only data appropriate for the selected purpose is performed in each of the server device 1 and the user terminal 2.

Note that a purchase price of each piece of data may be displayed on the developer screen G2.

Furthermore, an input field 95 for registering a training dataset collected or generated by the developer, or an AI model or AI-based software developed by the developer is provided on the right side of the developer screen G2.

The input field 95 for inputting a name and a data storage location is provided for each data. Furthermore, for the AI model, a check box 96 for setting necessity or unnecessity of retraining is provided.

Note that a price setting field or the like in which a sales price of data to be registered can be set may be provided as the input field 95.

Furthermore, on the upper side of the developer screen G2, a username, a last login date, and the like are displayed as part of the user information. Note that, in addition to the above, the amount of currency, the number of points, and the like that can be used when the user purchases data may be displayed.

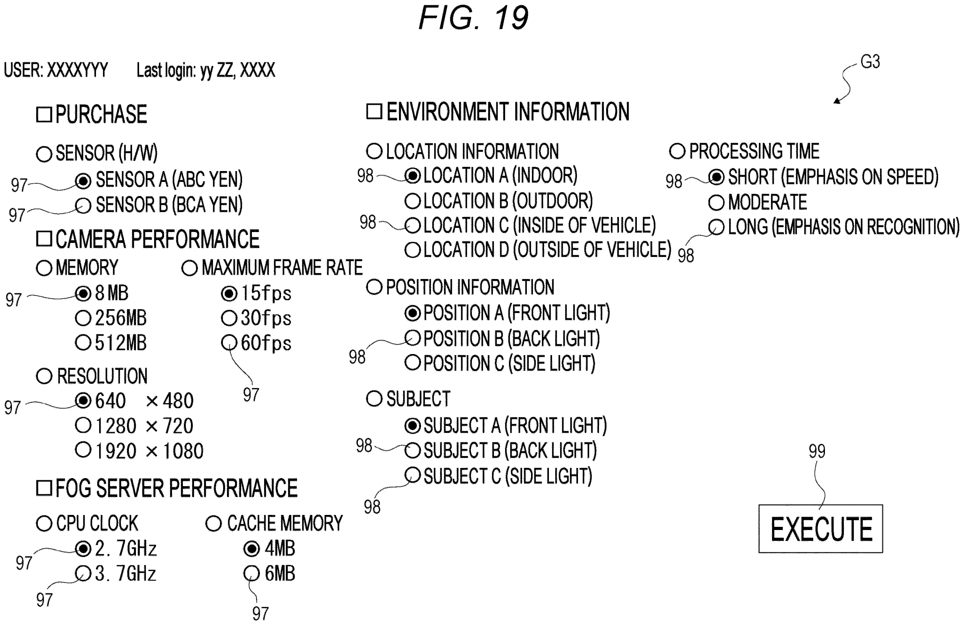

Fig. 19 is an example of a user screen G3. The user screen G3 is a screen presented to a user as a service user, that is, a user who receives presentation of various analysis results (the above-described application user) by deploying the AI-based software and the AI model to the camera 3 managed by the user.

The user can purchase the camera 3 to be arranged in a space to be monitored via the marketplace. Accordingly, a radio button 97 with which the type of the image sensor 30 to be mounted on the camera 3, the performance of the camera 3, and the like can be selected is arranged on the left side of the user screen G3.

Furthermore, the user can purchase an information processing device serving as the fog server 4 via the marketplace. Accordingly, a radio button 97 for selecting each performance of the fog server 4 is arranged on the left side of the user screen G3.

Furthermore, the user who already has the fog server 4 can register the performance of the fog server 4 by inputting the performance information of the fog server 4 here.

The user realizes a desired function by installing the purchased camera 3 (alternatively, a camera 3 purchased without going through the marketplace may be used) in any desired location such as a store managed by the user, and in order to maximize the function of each camera 3, information regarding the location where the camera 3 is installed can be registered in the marketplace.

A radio button 98 with which environment information regarding the environment where the camera 3 is installed can be selected is arranged on the right side of the user screen G3. Examples of the environment information selectable as illustrated in the drawing include a location where the camera 3 is installed, a type of the location, a type of a subject to be imaged, a processing time, and the like.

The user can set the above-described optimum imaging setting for the target camera 3 by appropriately selecting the environment information regarding the environment where the camera 3 is installed.

Note that, in a case where the camera 3 is purchased and the location where the camera 3 scheduled to be purchased is installed have been determined, it is possible to purchase the camera 3 for which an optimum imaging setting is performed in advance in accordance with the intended installation location by selecting each item on the left side and each item on the right side of the user screen G3.

Furthermore, the user screen G3 has an execution button 99. Pressing the execution button 99 causes a transition to a confirmation screen on which the purchase is confirmed or a confirmation screen on which the setting of the environment information is confirmed. This allows the user to purchase a desired camera 3 or a desired fog server 4 and set the environment information for the camera 3.

In the marketplace, it is possible to change the environment information of each camera 3 for when the location where the camera 3 is installed is changed. When the environment information regarding the location where the camera 3 is installed is input again on a change screen (not illustrated), it is possible to reset the imaging setting optimum for the camera 3.

### (4-6. Other modifications)

Here, in the above description, the example where the AI model is disabled by disabling the decryption of the AI model and the AI-based software as the processing related to the disabling of the use of the AI model has been described, or alternatively, it is also possible to realize the disabling of the use of the AI model in the camera 3 by changing a key used to encrypt firmware necessary for the AI image processing unit 44 to perform the AI image processing and changing the key at the time of unauthorized use in a similar manner.

Furthermore, in the above description, the configuration where the AI image processing is performed in the image sensor 30 has been exemplified, or alternatively, the AI image processing may be performed outside the image sensor 30. For example, the AI image processing may be performed by a processor provided outside the image sensor 30 but inside the camera 3, or may be performed by a processor provided in the fog server 4.

Furthermore, in the above description, the case where the camera 3 is configured to obtain a color image as a captured image has been exemplified, but in the present specification, "imaging" means, in a broad sense, obtaining image data capturing a subject. The image data described herein refers to a generic term for data including a plurality of pieces of pixel data, and the pixel data is a concept broadly including not only data indicating the intensity of the light reception amount from the subject but also data indicating, for example, the distance to the subject, polarization information, and temperature information. That is, the "image data" obtained by "imaging" includes data as a gray-scale image indicating information of the intensity of the light reception amount for each pixel, data as a distance image indicating information of the distance to the subject for each pixel, data as a polarization image indicating polarization information for each pixel, data as a thermal image indicating temperature information for each pixel, and the like.

Furthermore, regarding the security control for the output data of the AI image processing, when an encryption target area of the output data as an image is determined, it is also conceivable to provide a distance sensor such as a time of flight (ToF) sensor in the camera 3 as an external sensor of the image sensor 30, and encrypt only a subject portion within a predetermined distance as a target.

Furthermore, in the above description, the case where the information processing system 100 includes an AI camera as the camera 3 has been exemplified, or alternatively, a camera not having an image processing function using an AI model can be used as the camera 3.

In this case, it is conceivable that the encryption target is software or firmware deployed but not used by AI, and it is possible to disable the use of the software or the firmware in accordance with the use condition of the software or the firmware.

Furthermore, it is also conceivable to recognize whether or not a person appears in an output image from a sensor (for example, determine a skin color, or the like) by rule-based processing rather than AI processing, and switch the security level of the output image in accordance with the recognition result.

### <5. Summary of embodiment>

As described above, an information processing device (server device 1) as an embodiment includes a control unit (CPU 11: use control unit 11c) configured to determine whether or not a use state of an imaging device (camera 3) corresponds to a specific use state, the imaging device being configured to perform, using an artificial intelligence model, image processing on a captured image obtained by capturing an image of a subject, and perform, in a case where the use state is determined to correspond to the specific use state, disabling processing of making the imaging device unable to use the artificial intelligence model.

Accordingly, it is possible to disable the use of the imaging device in response to a case where the use state of the imaging device is inappropriate.

It is therefore possible to prevent the camera system from being abused, the camera system using the imaging device that performs the image processing using the artificial intelligence model.

Furthermore, in the information processing device as the embodiment, the imaging device decrypts an artificial intelligence model that has been encrypted and received from outside and uses the artificial intelligence model for the image processing, and the control unit performs, as the disabling processing, processing of making the imaging device unable to decrypt the artificial intelligence model.

It is possible to disable the use of the artificial intelligence model by disabling the decryption of the encrypted artificial intelligence model.

With the above-described configuration, it is therefore possible to disable the use of the artificial intelligence model by simple processing such as a processing of disabling the decryption by, for example, changing a key used for encryption or the like.

Moreover, in the information processing device as the embodiment, the control unit performs, as the disabling processing, processing of changing key information used to encrypt the artificial intelligence model.

Changing the key information used to encrypt the artificial intelligence model as described above makes the imaging device side unable to perform decryption using the key information used to decrypt the artificial intelligence model.

It is therefore possible to disable the use of the artificial intelligence model by simple processing such as processing of changing the key information used to encrypt the artificial intelligence model.

Moreover, in the information processing device as the embodiment, the imaging device is configured to decrypt the artificial intelligence model using key information generated by multiplying a master key stored in advance in the imaging device and a designated key that is a key designated from a side of the information processing device, and the control unit performs processing of transmitting, to the imaging device, the artificial intelligence model encrypted using key information generated by multiplying the master key and a key changed from the designated key.

Accordingly, the imaging device become unable to decrypt the artificial intelligence model transmitted from the information processing device. At this time, in order to disable the use of the artificial intelligence model, it is only necessary to change the designated key.

It is therefore possible to disable the use of the artificial intelligence model by simple processing such as processing of changing the designated key. Furthermore, with the above-described configuration, since it is necessary to use the master key for encrypting the artificial intelligence model, it is possible to prevent an imaging device other than a specific imaging device (imaging device as a compatible product) in which the master key is stored in advance from decrypting and using the artificial intelligence model.

Furthermore, in the information processing device as the embodiment, the control unit performs the determination on the basis of information acquired from the imaging device.

Examples of the information acquired from the imaging device include output data of image processing using the artificial intelligence model, output information (for example, information such as position, altitude, temperature, and motion) of various types of sensors included in the imaging device, and free space information of the memory used for the image processing using the artificial intelligence model. It is possible to grasp, depending on the output data of the image processing, the data content, the data type, the data size, the data output frequency, and the like, and to grasp, depending on the outputs of various types of sensors included in the imaging device, the environment, the situation, and the like where the imaging device is placed. Furthermore, it is possible to presume, depending on the free space information of the memory unit, what kind of processing is being performed as the image processing using the artificial intelligence model.

It is therefore possible to appropriately presume, using the information acquired from the imaging device, the use state of the imaging device such as the environment and situation where the imaging device is used and what kind of subject is subjected to the image processing, and it is possible to appropriately determine whether or not the use state corresponds to a specific use state.

Moreover, in the information processing device as the embodiment, the control unit performs the determination on the basis of output data of the image processing, the output data being acquired from the imaging device.

Accordingly, it is possible to presume the use state related to the execution mode of the image processing using the artificial intelligence model as the use state of the imaging device.

It is therefore possible to determine whether or not the use state of the imaging device corresponds to a specific use state from the viewpoint of the execution mode of the image processing, such as how frequently the image processing is performed on what kind of subject, for example.

Furthermore, in the information processing device as the embodiment, the control unit performs the determination on the basis of output information of a sensor (for example, a sensor in the sensor unit 36) included in the imaging device.

Accordingly, it is possible to presume the use state of the imaging device from the viewpoint of the location, the environment, the situation, and the like where the imaging device is used.

It is therefore possible to performs the determination, as determination as to whether or not the use state of the imaging device corresponds to a specific use state, from the viewpoint of such a use place, use environment, use situation, and the like.

Furthermore, in the information processing device as the embodiment, the control unit performs the determination on the basis of information regarding a free space of a memory used for the image processing, the information regarding the free space being acquired from the imaging device.

Accordingly, it is possible to presume the use state related to the execution mode of the image processing using the artificial intelligence model as the use state of the imaging device.

It is therefore possible to determine whether or not the use state of the imaging device corresponds to a specific use state from the viewpoint of the execution mode of the image processing, such as how frequently the image processing is performed on what kind of subject, for example.

Moreover, in the information processing device as the embodiment, the control unit performs the determination on the basis of information regarding an IP address of the imaging device.

It is therefore possible to determine whether or not the use state of the imaging device corresponds to a specific use state from the viewpoint of the location where the imaging device is used.

An information processing method as an embodiment includes performing, by a computer device, disabling control processing, the disabling control processing including determining whether or not a use state of an imaging device corresponds to a specific use state, the imaging device being configured to perform, using an artificial intelligence model, image processing on a captured image obtained by capturing an image of a subject, and performing, in a case where the use state is determined to correspond to the specific use state, disabling processing of making the imaging device unable to use the artificial intelligence model.

Such an information processing method can produce functions and effects similar to the functions and effects produced by the information processing device as the embodiment described above.

An imaging device (camera 3) as an embodiment includes an image processing unit (AI image processing unit 44) configured to perform, using an artificial intelligence model, image processing on a captured image obtained by capturing an image of a subject, and a control unit (in-sensor control unit 43)configured to switch, on the basis of output data of the image processing, a level of security processing for the output data.

With the above-described configuration, it is possible to switch the level of the security processing such as increasing the level of the security processing for output data for which a higher security level is required and decreasing the level of security processing for other output data, and it is possible to ensure the safety of the output data of the image processing using the artificial intelligence model and reduce the processing load on the imaging device simultaneously.

Furthermore, in the imaging device as the embodiment, the security processing includes processing of encrypting the output data, and the control unit switches an encryption level of the output data as switching of the level of the security processing.

The switching of the encryption level described herein a concept including switching of whether or not encryption is required and switching of the amount of data to be encrypted.

It is possible to encrypt, by switching the encryption level on the basis of the type of the output data, all output data for which a higher security level is required and not encrypt the other output data or encrypt only part of the data, for example, and it is therefore possible to ensure the safety of the output data of the image processing and reduce the processing load on the imaging device simultaneously.

Moreover, in the imaging device as the embodiment, the control unit encrypts the output data in a case where the output data is image data, and does not encrypt the output data in a case where the output data is specific data other than image data.

Possible examples of the image data output as a result of the image processing include image data of a recognized face, whole body, half body, or the like in a case where the subject is a person, image data of a recognized license plate in a case where the subject is a vehicle, and the like.

It is therefore possible to perform, in a case where the output data is image data as described above, encryption to improve safety. Furthermore, since the encryption is not performed in a case where the output data is specific data other than image data, it is not necessary to perform the encryption processing on all the output data, and it is therefore possible to reduce the processing load on the imaging device.

Furthermore, in the imaging device as the embodiment, the security processing includes processing of attaching electronic signature data for authenticity determination to the output data, and the control unit switches whether or not to attach the electronic signature data to the output data as switching of the level of the security processing.

It is therefore possible to ensure safety from the viewpoint of preventing spoofing and reduce the processing load on the imaging device simultaneously.

A control method as an embodiment is applied to an imaging device including an image processing unit configured to perform, using an artificial intelligence model, image processing on a captured image obtained by capturing an image of a subject, the control method including performing, by the imaging device, control to switch, on the basis of output data of the image processing, a level of security processing for the output data.

Even such a control method can produce functions and effects similar to the functions and effects produced by the imaging device as the embodiment described above.

Note that the effects described in the present specification are merely examples and are not limited, and other effects may be exerted.

### <6. Present technology>

The present technology may also have the following configurations.
(1) An information processing device including
   a control unit configured to determine whether or not a use state of an imaging device corresponds to a specific use state, the imaging device being configured to perform, using an artificial intelligence model, image processing on a captured image obtained by capturing an image of a subject, and perform, in a case where the use state is determined to correspond to the specific use state, disabling processing of making the imaging device unable to use the artificial intelligence model.
(2) The information processing device according to the above (1), in which
   the imaging device decrypts an artificial intelligence model that has been encrypted and received from outside and uses the artificial intelligence model for the image processing, and
   the control unit performs, as the disabling processing, processing of making the imaging device unable to decrypt the artificial intelligence model.
(3) The information processing device according to the above (2), in which
   the control unit performs, as the disabling processing, processing of changing key information used to encrypt the artificial intelligence model.
(4) The information processing device according to the above (3), in which
   the imaging device is configured to decrypt the artificial intelligence model using key information generated by multiplying a master key stored in advance in the imaging device and a designated key that is a key designated from a side of the information processing device, and
   the control unit performs processing of transmitting, to the imaging device, the artificial intelligence model encrypted using key information generated by multiplying the master key and a key changed from the designated key.
(5) The information processing device according to any one of the above (1) to (4), in which
   the control unit performs the determination on the basis of information acquired from the imaging device.
(6) The information processing device according to the above (5), in which
   the control unit performs the determination on the basis of output data of the image processing, the output data being acquired from the imaging device.
(7) The information processing device according to the above (5) or (6), in which
   the control unit performs the determination on the basis of output information of a sensor included in the imaging device.
(8) The information processing device according to any one of the above (5) to (7), in which
   the control unit performs the determination on the basis of information regarding a free space of a memory used for the image processing, the information regarding the free space being acquired from the imaging device.
(9) The information processing device according to any one of the above (1) to (8), in which
   the control unit performs the determination on the basis of information regarding an IP address of the imaging device.
(10) An information processing method including
   performing, by a computer device, disabling control processing, the disabling control processing including determining whether or not a use state of an imaging device corresponds to a specific use state, the imaging device being configured to perform, using an artificial intelligence model, image processing on a captured image obtained by capturing an image of a subject, and performing, in a case where the use state is determined to correspond to the specific use state, disabling processing of making the imaging device unable to use the artificial intelligence model.
(11) An imaging device including:
   an image processing unit configured to perform, using an artificial intelligence model, image processing on a captured image obtained by capturing an image of a subject; and
   a control unit configured to switch, on the basis of output data of the image processing, a level of security processing for the output data.
(12) The imaging device according to the above (11), in which
   the security processing includes processing of encrypting the output data, and
   the control unit switches an encryption level of the output data as switching of the level of the security processing.
(13) The imaging device according to the above (12), in which
   the control unit encrypts the output data in a case where the output data is image data, and does not encrypt the output data in a case where the output data is specific data other than image data.
(14) The imaging device according to any one of the above (11) to (13), in which
   the security processing includes processing of attaching electronic signature data for authenticity determination to the output data, and
   the control unit switches whether or not to attach the electronic signature data to the output data as switching of the level of the security processing.
(15) A control method applied to an imaging device including an image processing unit configured to perform, using an artificial intelligence model, image processing on a captured image obtained by capturing an image of a subject, the control method including
   performing, by the imaging device, control to switch, on the basis of output data of the image processing, a level of security processing for the output data.

### REFERENCE SIGNS LIST

- 1: Server device
- 2: User terminal
- 3: Camera
- F1: License authorization function
- F2: Account service function
- F3: Device monitoring function
- F4: Marketplace function
- F5: Camera service function
- 11: CPU
- 11a: Use preparation processing unit
- 11b: Point-of-use processing unit
- 11c: Use control unit
- 30: Image sensor
- 33: Control unit
- 35: Communication unit
- 36: Sensor unit
- 41: Imaging unit
- 42: Image signal processing unit
- 43: In-sensor control unit
- 43m: Non-volatile memory unit
- 44: Image recognition unit
- 45: Memory unit

## Claims

1. An information processing device comprising
a control unit configured to determine whether or not a use state of an imaging device corresponds to a specific use state, the imaging device being configured to perform, using an artificial intelligence model, image processing on a captured image obtained by capturing an image of a subject, and perform, in a case where the use state is determined to correspond to the specific use state, disabling processing of making the imaging device unable to use the artificial intelligence model.

2. The information processing device according to claim 1, wherein
the imaging device decrypts an artificial intelligence model that has been encrypted and received from outside and uses the artificial intelligence model for the image processing, and
the control unit performs, as the disabling processing, processing of making the imaging device unable to decrypt the artificial intelligence model.

3. The information processing device according to claim 2, wherein
the control unit performs, as the disabling processing, processing of changing key information used to encrypt the artificial intelligence model.

4. The information processing device according to claim 3, wherein
the imaging device is configured to decrypt the artificial intelligence model using key information generated by multiplying a master key stored in advance in the imaging device and a designated key that is a key designated from a side of the information processing device, and
the control unit performs processing of transmitting, to the imaging device, the artificial intelligence model encrypted using key information generated by multiplying the master key and a key changed from the designated key.

5. The information processing device according to claim 1, wherein
the control unit performs the determination on a basis of information acquired from the imaging device.

6. The information processing device according to claim 5, wherein
the control unit performs the determination on a basis of output data of the image processing, the output data being acquired from the imaging device.

7. The information processing device according to claim 5, wherein
the control unit performs the determination on a basis of output information of a sensor included in the imaging device.

8. The information processing device according to claim 5, wherein
the control unit performs the determination on a basis of information regarding a free space of a memory used for the image processing, the information regarding the free space being acquired from the imaging device.

9. The information processing device according to claim 1, wherein
the control unit performs the determination on a basis of information regarding an IP address of the imaging device.

10. An information processing method comprising
performing, by a computer device, disabling control processing, the disabling control processing including determining whether or not a use state of an imaging device corresponds to a specific use state, the imaging device being configured to perform, using an artificial intelligence model, image processing on a captured image obtained by capturing an image of a subject, and performing, in a case where the use state is determined to correspond to the specific use state, disabling processing of making the imaging device unable to use the artificial intelligence model.

11. An imaging device comprising:
an image processing unit configured to perform, using an artificial intelligence model, image processing on a captured image obtained by capturing an image of a subject; and
a control unit configured to switch, on a basis of output data of the image processing, a level of security processing for the output data.

12. The imaging device according to claim 11, wherein
the security processing includes processing of encrypting the output data, and
the control unit switches an encryption level of the output data as switching of the level of the security processing.

13. The imaging device according to claim 12, wherein
the control unit encrypts the output data in a case where the output data is image data, and does not encrypt the output data in a case where the output data is specific data other than image data.

14. The imaging device according to claim 11, wherein
the security processing includes processing of attaching electronic signature data for authenticity determination to the output data, and
the control unit switches whether or not to attach the electronic signature data to the output data as switching of the level of the security processing.

15. A control method applied to an imaging device including an image processing unit configured to perform, using an artificial intelligence model, image processing on a captured image obtained by capturing an image of a subject, the control method comprising
performing, by the imaging device, control to switch, on a basis of output data of the image processing, a level of security processing for the output data.
